# EUROPEAN PATENT APPLICATION

(11) **EP 4 610 943 A1**
(43) Date of publication of application: **03.09.2025**
(21) Application number: 25159655.7
(22) Date of filing: 24.02.2025
(51) Int. Cl.: G06V 20/52

(54) **INFORMATION PROVIDING APPARATUS, INFORMATION PROVIDING METHOD, AND INFORMATION PROVIDING PROGRAM**

(30) Priority: 28.02.2024 JP 2024028730
(71) Applicant: amnimo Inc., Musashino-shi, Tokyo 180-8750 (JP)
(72) Inventor: KOJIMA, Osamu, Musashino-shi, Tokyo 180-8750 (JP); WADA, Atsushi, Musashino-shi, Tokyo 180-8750 (JP)
(74) Representative: Winter, Brandl - Partnerschaft mbB

(57) **Abstract**

A server device (10) collects monitoring data acquired by a monitoring device (30) that is installed in each of a plurality of monitoring target sites included in a monitoring target area; detects, based on the collected monitoring data, an event that has occurred in each of the plurality of monitoring target sites; and generates, by using a generation model that outputs text data that indicates content of the event that has occurred in the monitoring target area when the detection result is input, a monitoring report that includes the text data.

## Description

### FIELD

The present invention relates to an information providing apparatus, an information providing method, and an information providing program.

### BACKGROUND

There is a known technology for automatically generating a work report for managing a degree of progress of a work schedule in accordance with a work target and managing a state of the work target in accordance with a degree of progress on the basis of both of work data in accordance with a process flow at the time of work performed on each of the work targets and captured image data obtained by capturing the state of each of the work targets associated with the process flow.

Patent Document 1: Japanese Laid-open Patent Publication No. 2023-12312

However, it is difficult to effectively recognize an event that has occurred in a monitoring target area when facility security or equipment management is performed. For example, in a case where a plurality of monitoring target sites needed to be periodically monitored are present in the monitoring target area, it is difficult to automatically generate a monitoring report explaining the event occurred in the monitoring target area in a text sentence that is easy for an administrator to read and understand.

Accordingly, the present invention has been conceived in light of the circumstances described above and an object thereof is to effectively recognize an event that has occurred in a monitoring target area.

### SUMMARY

According to an aspect of the embodiments, an information providing apparatus includes a collection unit that collects monitoring data acquired by a monitoring device that is installed in each of a plurality of monitoring target sites included in a monitoring target area, an analysis unit that detects, based on the collected monitoring data, an event that has occurred in each of the plurality of monitoring target sites, and a generation unit that generates, by using a machine learning model that outputs text data that indicates content of the event that has occurred in the monitoring target area when the detection result is input, a monitoring report that includes the text data.

According to an aspect of the embodiments, An information providing method that causes a computer to execute a process includes collecting monitoring data acquired by a monitoring device that is installed in each of a plurality of monitoring target sites included in a monitoring target area, detecting, based on the collected monitoring data, an event that has occurred in each of the plurality of monitoring target sites, and generating, by using a machine learning model that outputs text data that indicates content of the event that has occurred in the monitoring target area when the detection result is input, a monitoring report that includes the text data.

According to an aspect of the embodiments, an information providing program that causes a computer to execute a process includes collecting monitoring data acquired by a monitoring device that is installed in each of a plurality of monitoring target sites included in a monitoring target area, detecting, based on the collected monitoring data, an event that has occurred in each of the plurality of monitoring target sites, and generating, by using a machine learning model that outputs text data that indicates content of the event that has occurred in the monitoring target area when the detection result is input, a monitoring report that includes the text data.

### BRIEF DESCRIPTION OF THE DRAWINGS

FIG. 1 is a diagram illustrating a configuration example and a process example of a cyclic monitoring system according to a first embodiment;
FIG. 2 is a block diagram illustrating a configuration example of each device included in the cyclic monitoring system according to the first embodiment;
FIG. 3 is a diagram illustrating one example of a monitoring data storage unit included in a server device according to the first embodiment;
FIG. 4 is a diagram illustrating one example of a monitoring report storage unit included in the server device according to the first embodiment;
FIG. 5 is a diagram illustrating one example of an analysis model storage unit included in the server device according to the first embodiment;
FIG. 6 is a diagram illustrating one example of a generation model storage unit included in the server device according to the first embodiment;
FIG. 7 is a flowchart illustrating one example of the overall flow of a process performed in the cyclic monitoring system according to the first embodiment;
FIG. 8 is a diagram illustrating a configuration example and a process example of a cyclic monitoring system according to a second embodiment;
FIG. 9 is a block diagram illustrating a configuration example of each device included in the cyclic monitoring system according to the second embodiment;
FIG. 10 is a diagram illustrating one example of an analysis model storage unit included in a server device according to the second embodiment;
FIG. 11 is a diagram illustrating one example of a candidate information storage unit included in the server device according to the second embodiment;
FIG. 12 is a diagram illustrating one example of a setting information storage unit included in the server device according to the second embodiment;
FIG. 13 is a diagram illustrating a first specific example of a display screen of an operator terminal according to the second embodiment;
FIG. 14 is a diagram illustrating a second specific example of the display screen of the operator terminal according to the second embodiment;
FIG. 15 is a flowchart illustrating one example of the overall flow of a process performed in the cyclic monitoring system according to the second embodiment; and
FIG. 16 is a diagram illustrating an example of a hardware configuration according to each of the first embodiment and the second embodiment.

### DETAILED DESCRIPTION OF THE PREFERRED EMBODIMENTS

Preferred embodiments of an information providing apparatus, an information providing method, and an information providing program according to a first embodiment and a second embodiment of the present invention will be explained in detail below with reference to the accompanying drawings. Furthermore, the present invention is not limited to the embodiments described below.

### First Embodiment

In the following, a configuration and a process related to a cyclic monitoring system 100-1 according to the first embodiment, a configuration and a process related to each device included in the cyclic monitoring system 100-1, and the flow of the process performed in the cyclic monitoring system 100-1 will be described in this order, and, at the end, effects of the embodiment will be described.

### 1. Configuration and process related to cyclic monitoring system 100-1

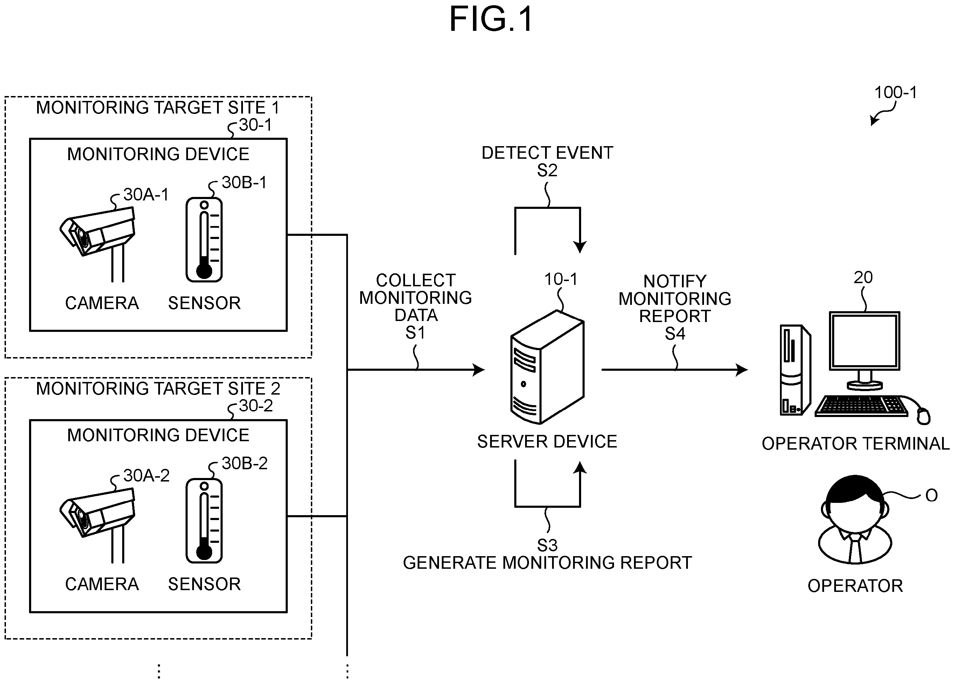

A configuration and a process related to the cyclic monitoring system 100-1 according to an embodiment will be described in detail with reference to FIG. 1. FIG. 1 is a diagram illustrating a configuration example and a process example of the cyclic monitoring system 100-1 according to the embodiment. In a description below, an example of the overall configuration of the cyclic monitoring system 100-1, an example of a process performed in the cyclic monitoring system 100-1, and the effects of the cyclic monitoring system 100-1 will be described. Furthermore, in the embodiment, a description will be given by using, as one example, identification of a person, detection of a behavior of the person, or detection of an abnormal state at the time of facility security or equipment management will be described as one example, but the embodiment is not intended to limit fields of application. The embodiment may also be applicable to monitoring of parks, roads, rivers, and the like, and, furthermore, an analysis target of the behavior detection is not intended to limit persons, but may also be applicable to construction machine, robots, or animals.

### 1-1. Example of overall configuration of cyclic monitoring system 100-1

The cyclic monitoring system 100-1 includes a server device 10-1, an operator terminal 20, and a monitoring device 30. Here, the server device 10-1, the operator terminal 20, and the monitoring device 30 are connected to one another via a predetermined communication network (not illustrated) so as to be able to communicate each other in a wired or wireless manner. Furthermore, various kinds of communication networks, such as the Internet or a dedicated line, may be used for the predetermined communication network.

### 1-1-1. Server device 10-1

The server device 10-1 is an information providing apparatus that analyzes monitoring data (image data and measurement data) collected from the monitoring device 30, and that generates a monitoring report. For example, the server device 10-1 is implemented by a cloud environment, an on-premise environment, an edge environment, or the like. Furthermore, in the cyclic monitoring system 100-1 illustrated in FIG. 1, two or more of the server devices 10-1 may be included.

### 1-1-2. Operator terminal 20

The operator terminal 20 is an administrator terminal that is used by an operator O who is an administrator of a monitoring target area. Furthermore, two or more of the operator terminals 20 may be included in the cyclic monitoring system 100-1 illustrated in FIG. 1.

### 1-1-3. Monitoring device 30

The monitoring device 30 is an image capturing device or a measurement device installed in each monitoring target site included in the monitoring target area, and is implemented by a camera 30A, a sensor 30B, or the like. Here, the camera 30A is an image capturing device, such as a security camera or a monitoring camera, installed in, for example, each of the monitoring target sites. Furthermore, the sensor 30B is a measurement device, such as a thermometer, a hygrometer, a noise level meter, an intrusion detection sensor, a human presence detection sensor, or a gas detector, installed in, for example, each of the monitoring target sites.

Here, the monitoring target area is an area in a predetermined range including a plurality of monitoring target sites monitored by the cyclic monitoring system 100-1, and is a building or a house including a plurality of rooms, a plant or a factory including a plurality of devices, a constructed building including a plurality of construction work pieces built in a park, a road, or a river, a farming ground or an ocean area including a plurality of monitoring points, or the like, but is not particularly limited to these examples.

In the example illustrated in FIG. 1, a monitoring device 30-1 (a camera 30A-1 and a sensor 30B-1) is installed in a monitoring target site 1, and a monitoring device 30-2 (a camera 30A-2 and a sensor 30B-2) is installed in a monitoring target site 2.

### 1-2. Example of overall process performed in cyclic monitoring system 100-1

The overall process performed in the cyclic monitoring system 100-1 as described above will be described. Furthermore, the processes performed at Steps S1 to S4 described below may be performed in different order. In addition, some of the processes performed at Steps S1 to S4 described below may be omitted.

### 1-2-1. Monitoring data collection process

At a first step, the server device 10-1 collects pieces of monitoring data from the monitoring device 30 (Step S1). For example, the server device 10-1 collects, from the camera 30A (30A-1, 30A-2, and ...) installed in each of the monitoring target sites, pieces of image data on corresponding still images captured every seconds. Moreover, the server device 10-1 collects, from the sensor 30B (30B-1, 30B-2, and ...) installed in each of the monitoring target sites, pieces of measurement data on corresponding temperatures measured every seconds.

At this time, the server device 10-1 stores therein the collected monitoring data together with an image capturing time and a measurement time period. Furthermore, the image data may be image data on a moving image, or data including audio data. Moreover, the measurement data may be data on humidity, noise, an intrusion detection signal, a human presence detection signal, a gas detection signal, or the like.

### 1-2-2. Event detection process

At a second step, the server device 10-1 detects an event (Step S2). For example, the server device 10-1 analyzes the image data, and detects a person appearing the monitoring target site, a behavior exhibited by the person, or the like as the event. Moreover, the server device 10-1 analyzes the measurement data, and detects an abnormal state of a room temperature, noise, or the like that has occurred in the monitoring target site as the event. At this time, the server device 10-1 is also able to detect each of the events that has occurred in the corresponding monitoring target sites by using an analysis model AM that is a machine learning model that outputs an event when monitoring data is input.

### 1-2-3. Monitoring report generation process

At a third step, the server device 10-1 generates a monitoring report (Step S3). For example, the server device 10-1 generates the monitoring report including text data that indicates the content of the event that has occurred in the monitoring target area. At this time, the server device 10-1 uses a generation model GM that is a machine learning model that outputs the text data that indicates the content of the event that has occurred in the monitoring target site when a detection result of the event is input, and generates the monitoring report including the text data (for example, an event details, an event outline, an event statistical value, etc.) that indicates the content of each of the events that has occurred in the monitoring target area.

As a first specific example, the server device 10-1 generates a monitoring report including the details of each of the events that has occurred in the corresponding monitoring target sites. For example, the server device 10-1 generates, as a monitoring report of a "building A" that is the monitoring target area, a monitoring report including the details that are related to each of the events occurred in the corresponding monitoring target sites and that indicates that "in a room A-1, one person entered a room at time t1, three persons entered the room at time t2, and four persons left the room at time t3.", "in a room A-2, a room temperature exceeded the degree of a default value T at time t4, and dropped below the degree of the default value T at time t5.", or the like.

As a second specific example, the server device 10-1 generates a monitoring report including the outline (summary) of each of the events that has occurred in the corresponding monitoring target sites. For example, the server device 10-1 generates, as a monitoring report of the "building A" that is the monitoring target area, a monitoring report including the outline that is related to each of the events occurred in the corresponding monitoring target sites and that indicates that "in the room A-1, a total of four persons entered and left the room. ", "in the room A-2, the room temperature temporarily exceeded the default value. ", or the like.

As a third specific example, the server device 10-1 generates a monitoring report including a statistical value of each of the events that has occurred in the corresponding monitoring target sites. For example, the server device 10-1 generates, as a monitoring report of the "building A" that is a monitoring target area, a monitoring report that includes the number of occurrences of each of the events that has occurred in the corresponding monitoring target sites, a frequency of occurrences of the events, and the like and that indicates that "the room A-1: a total of four persons entered and left the room, the room A-2: an excess of the default value of room temperature is once.", or the like.

Furthermore, the server device 10-1 is also able to specify a degree of importance associated with the event, and is able to generate a monitoring report including the text data that indicates the content of each of the events in accordance with the condition assigned to the degree of importance.

Here, the degree of importance indicates a degree of urgency for a need to respond to an event (incident), a priority order, a degree of severity, or the like, and is expressed by, for example, 11 levels between 0 and 10. Furthermore, the degree of importance may also be expressed by a score between 0 and 100%, a rank of A, B, or C, a rank of high, medium, or low, or the like.

For example, in a case where the degree of importance of the event is "high", the server device 10-1 generates an event outline without setting the upper limit of the number of characters, and generates the monitoring report describing the event outline before the event details of each of the monitoring target sites. Moreover, in a case where the degree of importance of the event is "medium", the server device 10-1 generates an event outline or an event statistical value within the range of the upper limit of the designated number of characters, and generates the monitoring report describing the event outline or the event statistical value before the event details of each of the monitoring target sites. Moreover, in a case where the degree of importance of the event is "low", the server device 10-1 generates an event statistical value, and then, generates a monitoring report describing the event statistical value before the event details of each of the monitoring target sites.

Furthermore, the server device 10-1 is also able to generate, together with the text data, a monitoring report including the audio data that indicates the content of each of the events. Moreover, the server device 10-1 is also able to generate, together with the text data, a monitoring report including the video image data that has been synchronized with the audio data that indicates the content of each of the events.

### 1-2-4. Monitoring report notification process

At a fourth step, the server device 10-1 notifies the operator O of the monitoring report (Step S4). For example, the server device 10-1 transmits the generated monitoring report to the operator terminal 20, and causes the monitor of the operator terminal 20 to display a text indicating the content of each of the events. Moreover, the server device 10-1 is also able to cause the operator terminal 20 to read out the text or display the synchronized video image, in addition to cause the operator terminal 20 to display the content of each of the events.

At this time, in a case where the degree of importance of the detected event is equal to or greater than a predetermined value, the server device 10-1 is also able to notify the operator terminal 20 of an alarm.

### 1-3. Effects of cyclic monitoring system 100-1

In the following, problems of a cyclic monitoring system 100P according to a reference technology will be described, and then, effects of the cyclic monitoring system 100-1 will be described.

### 1-3-1. Problems of cyclic monitoring system 100P

The cyclic monitoring system 100P according to the reference technology is a technology for generating a written report related to work performed on a work target and automatically generating a work report for managing a degree of progress of a work schedule in accordance with the work target and managing a state of the work target in accordance with the degree of progress on the basis of the work data and the captured image data, by inputting the work data in accordance with a process flow at the time of work performed on the work target and by generating captured image data obtained by capturing the state of the work target corresponding to the process flow. However, with the cyclic monitoring system 100P, the automatically generated work report is not always described in a text that is easy to read and understand. Moreover, with the cyclic monitoring system 100P, it is assumed that a worker actually visits each of the sites, so that it is difficult to automatically generate the work report without the worker directly going the rounds of each of the sites.

### 1-3-2. Outline of cyclic monitoring system 100-1

In the cyclic monitoring system 100-1, the following processes are performed. At a first step, the server device 10-1 collects pieces of monitoring data, such as image data and measurement data, from the monitoring device 30 installed in the monitoring target site. At a second step, the server device 10-1 analyzes the collected pieces of monitoring data, and detects the event that has occurred in the monitoring target site. At a third step, the server device 10-1 generates a monitoring report including a text, voice, and a video image related to the details, the outline, and the statistical value of the event. At this time, the server device 10-1 is also able to generate the monitoring report in accordance with the degree of importance of the event. At a fourth step, the server device 10-1 notifies the operator O of the generated monitoring report.

### 1-3-3. Effects of cyclic monitoring system 100-1

The following effects are provided in the cyclic monitoring system 100-1. As a first effect, the cyclic monitoring system 100-1 is able to generate the monitoring report including a text by using the generation model GM, so that the cyclic monitoring system 100-1 is able to easily provide a text that is easy for the operator O who is the administrator to read and understand. As a second effect, the cyclic monitoring system 100-1 is able to analyze the pieces of collected monitoring data, and is able to detect the event that has occurred in the monitoring target site, so that the cyclic monitoring system 100-1 is able to automatically generate the monitoring report without the operator O directly going the rounds of each of the monitoring target sites. As a third effect, the cyclic monitoring system 100-1 is able to generate the monitoring report including a text, voice, and a video image related to the details, the outline, and the statistical value of the event, and is able to easily generate a multimedia report that provides information in various formats. As a fourth effect, the cyclic monitoring system 100-1 is able to generate the monitoring report including details and the outline that are different in accordance with the degree of importance of the event, so that it is possible for the operator O to easily understand the circumstances of the monitoring target area in a short time.

As described above, with the cyclic monitoring system 100-1, it is possible to effectively recognize the event that has occurred in the monitoring target area.

### 2. Configuration process related to each device included in cyclic monitoring system 100-1

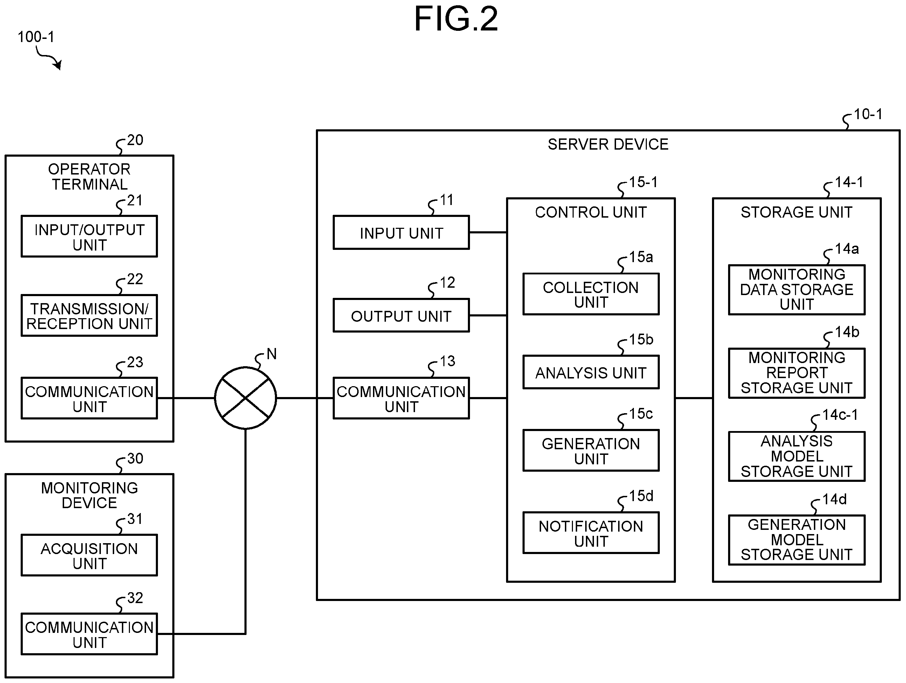

A configuration and a process related to each of the devices included in the cyclic monitoring system 100-1 illustrated in FIG. 1 will be described with reference to FIG. 2. FIG. 2 is a block diagram illustrating an example of a configuration of each of the devices included in the cyclic monitoring system 100-1 according to the first embodiment. In the following, an example of the overall configuration of the cyclic monitoring system 100-1 according to the first embodiment will be described first, a configuration example and a process example of the server device 10-1, a configuration example and a process example of the operator terminal 20, and a configuration example and a process example of the monitoring device 30 will be described in detail.

### 2-1. Example of overall configuration of cyclic monitoring system 100-1

An example of the overall configuration of the cyclic monitoring system 100-1 illustrated in FIG. 1 will be described with reference to FIG. 2. As illustrated in FIG. 2, the cyclic monitoring system 100-1 includes the server device 10-1, the operator terminal 20, and the monitoring device 30. Moreover, the server device 10-1, the operator terminal 20, and the monitoring device 30 are connected to one another via a communication network N implemented by the Internet, a dedicated line, or the like so as to be able to communicate each other in a wired or wireless manner.

The server device 10-1 is installed in a cloud environment, an on-premise environment, an edge environment, or the like. Moreover, the operator terminal 20 is installed in a monitoring room for a facility, equipment, a section, or the like managed by the operator O. Moreover, the monitoring device 30 is installed in a monitoring target site that is a monitoring site of the facility, equipment, or the section.

### 2-2. Configuration example and process example of server device 10-1

A configuration example and a process example of the server device 10-1 will be described with reference to FIG. 2. The server device 10-1 is an information providing apparatus, and includes an input unit 11, an output unit 12, a communication unit 13, a storage unit 14-1, and a control unit 15-1.

### 2-2-1. Input unit 11

The input unit 11 manages an input of various kinds of information with respect to the server device 10-1. For example, the input unit 11 is implemented by a mouse, a keyboard, or the like, and receives an input of various kinds of information to the server device 10.

### 2-2-2. Output unit 12

The output unit 12 manages an output of various kinds of information received from the server device 10-1. For example, the output unit 12 is implemented by a display, or the like, and displays various kinds of information stored in the server device 10-1.

### 2-2-3. Communication unit 13

The communication unit 13 manages data communication performed with the other devices. For example, the communication unit 13 performs data communication with each of the communication devices via a router, or the like. Moreover, the communication unit 13 is able to perform data communication with a terminal that is used by an operator (not illustrated).

### 2-2-4. Storage unit 14-1

The storage unit 14-1 stores therein various kinds of information referred to by the control unit 15-1 when the control unit 15-1 operates, and various kinds of information that have been acquired when the control unit 15-1 operates. The storage unit 14-1 includes a monitoring data storage unit 14a, a monitoring report storage unit 14b, an analysis model storage unit 14c-1, and a generation model storage unit 14d. Here, the storage unit 14-1 is implemented by, for example, a semiconductor memory device, such as a random access memory (RAM) or a flash memory, or a storage device, such as a hard disk or an optical disk. Furthermore, in the example illustrated in FIG. 2, the storage unit 14-1 is installed in the server device 10-1; however, the storage unit 14-1 may be installed outside the server device 10-1, or a plurality of storage units may be installed.

### 2-2-4-1. Monitoring data storage unit 14a

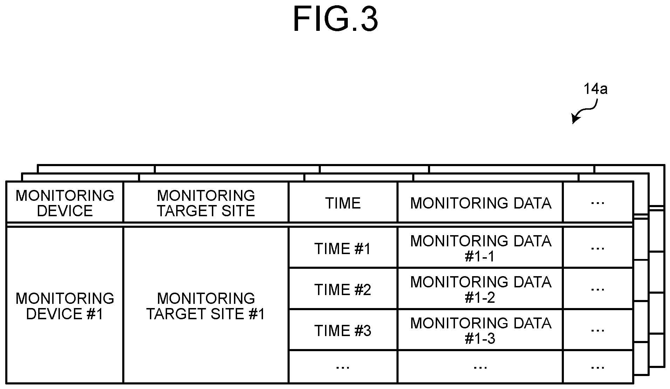

The monitoring data storage unit 14a stores therein monitoring data. For example, the monitoring data storage unit 14a stores therein pieces of monitoring data collected by a collection unit 15a that will be described later and that is included in the control unit 15-1. In the following, one example of the data stored in the monitoring data storage unit 14a will be described with reference to FIG. 3. FIG. 3 is a diagram illustrating one example of the monitoring data storage unit 14a included in the server device 10-1 according to the first embodiment. In the example illustrated in FIG. 3, the monitoring data storage unit 14a includes items of a "monitoring device", a "monitoring target site", "time", "monitoring data", and the like.

The "monitoring device" indicates identification information for identifying an image capturing device or a measurement device, and is an identification number of an identification symbol of, for example, the camera 30A or the sensor 30B. The "monitoring target site" indicates identification information for identifying a facility, equipment, or a section in which the image capturing device or the measurement device is installed in the monitoring target area, and is an identification number or an identification symbol of, for example, the facility, the equipment, or the section. The "time" indicates image capturing time or a measurement time period, and is represented in, for example, a year-month-day format or an hour-minute-second format. The "monitoring data" indicates the monitoring data acquired at the image capturing time or the measurement time period, and is, for example, image data on a still image, image data on a moving image, image data on a moving image including audio data, measurement data on a temperature, measurement data on humidity, measurement data on noise, measurement data on an intrusion detection signal, measurement data on a human presence detection signal, measurement data on a gas detection signal, or the like acquired every seconds.

**In** other words, FIG. 3 illustrates an example in which the monitoring data storage unit 14a stores therein data related to both of the monitoring device 30 identified by a "monitoring device #1" and the monitoring target site identified by a "monitoring target site #1" included in the monitoring target area is the data of {time: "time #1", and monitoring data: "monitoring data #1-1"}, {time: "time #2", and monitoring data: "monitoring data #1-2"}, {time: "time #3", and monitoring data: "monitoring data #1-3"}, and the like.

### 2-2-4-2. Monitoring report storage unit 14b

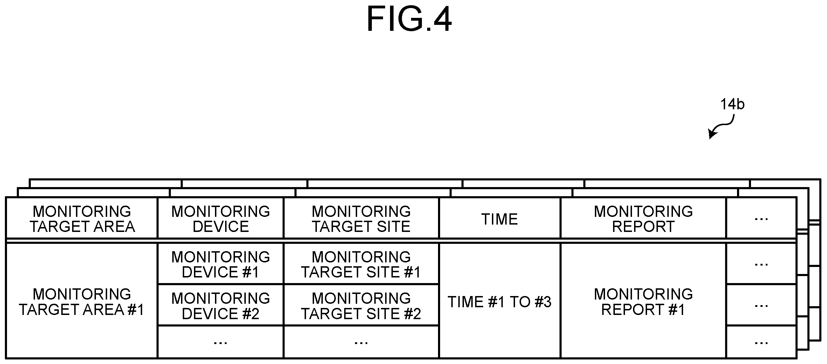

The monitoring report storage unit 14b stores therein a monitoring report. For example, the monitoring report storage unit 14b the monitoring report generated by a generation unit 15c that will be described later and that is included in the control unit 15-1. **In** the following, one example of the data stored in the monitoring report storage unit 14b will be described with reference to FIG. 4. FIG. 4 is a diagram illustrating one example of the monitoring report storage unit 14b included in the server device 10-1 according to the first embodiment. **In** the example illustrated in FIG. 4, the monitoring report storage unit 14b includes items of a "monitoring target area", a "monitoring device", a "monitoring target site", "time", a "monitoring report", and the like.

The "monitoring target area" indicates identification information for identifying a facility group, an equipment group, or a section group in which the image capturing device or the measurement device is installed, and is an identification number or an identification symbol of, for example, the facility group, the equipment group, or the section group. The "monitoring device" indicates identification information for identifying an image capturing device or a measurement device, and is an identification number or an identification symbol of, for example, the camera 30A or the sensor 30B. The "monitoring target site" indicates identification information for identifying the facility, the equipment, or the section in which the image capturing device or the measurement device is installed in the monitoring target area, and is an identification number or an identification symbol of, for example, the facility, the equipment, or the section. The "time" indicates a time zone targeted by the monitoring report, and is represented in, for example, a section using a year-month-day format or an hour-minute-second format. The "monitoring report" is text data indicating the content of the event that has occurred in the monitoring target area in the targeted time zone, and is, for example, text data that indicates the details of the event, text data that indicates the outline of the event, text data that indicates the statistical value of the event, audio data replayed together with the text data that explains the content of the event, audio data and video image data each of which are replayed together with the text data that explains the content of the event, or the like.

In other words, FIG. 4 illustrates an example in which the monitoring report storage unit 14b stores therein the data indicating that the data of {time: "time #1 to #3", and monitoring report: "monitoring report #1"} is associated with the monitoring target area identified by a "monitoring target area #1" that includes {monitoring device: "monitoring device #1", and monitoring target site: "monitoring target site #1"}, {monitoring device: "monitoring device #2", and monitoring target site: "monitoring target site #2"}, ... and the like.

### 2-2-4-3. Analysis model storage unit 14c-1

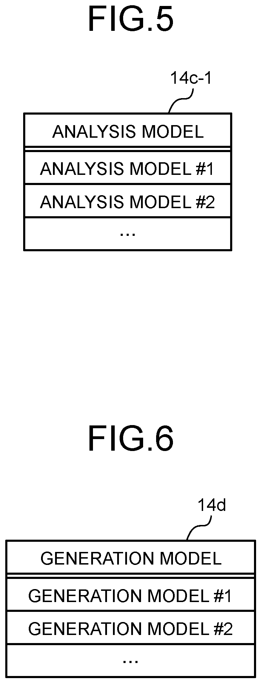

The analysis model storage unit 14c-1 stores therein the analysis model AM. For example, the analysis model storage unit 14c-1 stores therein the analysis model AM that is a machine learning model that is used by an analysis unit 15b that will be described later and that is included in the control unit 15-1. In the following, one example of the data stored in the analysis model storage unit 14c-1 will be described with reference to FIG. 5. FIG. 5 is a diagram illustrating one example of the analysis model storage unit 14c-1 included in the server device 10-1 according to the first embodiment. In the example illustrated in FIG. 5, the analysis model storage unit 14c-1 includes an item of an "analysis model".

The "analysis model" is model data used by the machine learning model, and is data including, for example, execution data for performing the algorithms for the analysis models AM that is used for image analysis that detects an event from image data, sensor analysis that detects an event from measurement data, or the like; model parameters that are set values; hyperparameters; or the like.

FIG. 5 illustrates an example in which the analysis model storage unit 14c-1 stores therein a plurality of trained machine learning models indicated by an "analysis model #1", an "analysis model #2", ... , and the like.

### 2-2-4-4. Generation model storage unit 14d

The generation model storage unit 14d stores therein the generation model GM. For example, the generation model storage unit 14d stores therein the generation model GM that is the machine learning model used by the generation unit 15c that will be described later and that is included in the control unit 15-1. In the following, one example of data stored in the generation model storage unit 14d will be described with reference to FIG. 6. FIG. 6 is a diagram illustrating one example of the generation model storage unit 14d included in the server device 10-1 according to the first embodiment. In the example illustrated in FIG. 6, the generation model storage unit 14d includes an item of a "generation model".

The "generation model" is model data used by a trained machine learning model, and is, for example, execution data for performing the algorithms for a language generation model, model parameters that are set values, hyperparameters, or the like.

FIG. 6 illustrates an example in which the generation model storage unit 14d stores therein a plurality of trained machine learning models indicated by a "generation model #1", a "generation model #2", ... , and the like.

### 2-2-5. Control unit 15-1

The control unit 15-1 manages the overall control of the server device 10-1. The control unit 15-1 includes the collection unit 15a, the analysis unit 15b, the generation unit 15c, and a notification unit 15d. Here, the control unit 15-1 is implemented by, for example, an electronic circuit, such as a central processing unit (CPU) or a micro processing unit (MPU), or an integrated circuit, such as an application specific integrated circuit (ASIC) or a field programmable gate array (FPGA).

### 2-2-5-1. Collection unit 15a

The collection unit 15a collects various kinds of information. Furthermore, the collection unit 15a may store the collected various kinds of information in the storage unit 14-1. In the following, a monitoring data collection process (an image data collection process and a measurement data collection process) will be described.

### Monitoring data collection process

The collection unit 15a performs the monitoring data collection process. For example, the collection unit 15a collects pieces of monitoring data that has been acquired by the monitoring device 30 that is installed in each of the plurality of monitoring target sites included in the monitoring target area.

A specific example will be described. The collection unit 15a collects, as the monitoring data that has been acquired by the monitoring device 30-1 installed in the monitoring target site 1 and that has been transmitted to the server device 10-1, pieces of monitoring data indicated by {time: "time #1", and monitoring data: "monitoring data #1-1"}, {time: "time #2", and monitoring data: "monitoring data #1-2"}, {time: "time #3", and monitoring data: "monitoring data #1-3"}, and the like, and stores the collected pieces of data in the monitoring data storage unit 14a. Moreover, the collection unit 15a collects, as the monitoring data that has been acquired by the monitoring device 30-2 installed in the monitoring target site 2 and that has been transmitted to the server device 10-1, pieces of monitoring data indicated by {time: "time #1", and monitoring data: "monitoring data #2-1"}, {time: "time #2", and monitoring data: "monitoring data #2-2"}, {time: "time #3", and monitoring data: "monitoring data #2-3"}, and the like, and stores the collected data in the monitoring data storage unit 14a.

### Image data collection process

The collection unit 15a performs the image data collection process as the monitoring data collection process. For example, the collection unit 15a collects, as the monitoring data, pieces of image data acquired by the image capturing device installed in the plurality of monitoring target sites. At this time, the collection unit 15a collects image data on a still image, image data on a moving image, image data on a moving image including audio data, or the like acquired by, for example, the camera 30A every seconds.

### Measurement data collection process

The collection unit 15a performs a measurement data collection process as the monitoring data collection process. For example, the collection unit 15a collects, as the monitoring data, pieces of measurement data acquired by the measurement device installed in each of the plurality of monitoring target sites. At this time, the collection unit 15a collects pieces of measurement data, such as measurement data of a temperature, measurement data of humidity, measurement data of noise, measurement data of an intrusion detection signal, measurement data of a human presence detection signal, or measurement data of a gas detection signal, that are acquired by, for example, the sensor 30B every seconds.

### 2-2-5-2. Analysis unit 15b

The analysis unit 15b analyzes various kinds of information. Furthermore, the analysis unit 15b may also acquire various kinds of information from the storage unit 14-1. Moreover, the analysis unit 15b may also store the analysis result in the storage unit 14-1. In the following, an event detection process (an image data analysis process and a measurement data analysis process) will be described.

### Event detection process

The analysis unit 15b performs the event detection process. For example, the analysis unit 15b detects, on the basis of the collected monitoring data, the event that has occurred in each of the plurality of monitoring target sites.

A specific example will be described. The analysis unit 15b analyzes, as the monitoring data collected from the monitoring device 30-1 installed in the monitoring target site 1, the monitoring data indicated by {monitoring device: "monitoring device #1", monitoring target site: "monitoring target site #1", time: "time #1", and monitoring data: "monitoring data #1-1"}; detects the event that has occurred in the monitoring target site 1; and outputs, as the detection result, data indicated by {monitoring device: "monitoring device #1", monitoring target site: "monitoring target site #1", time: "time #1", and event: "event #1-1"}. Moreover, the analysis unit 15b analyzes, as the monitoring data collected from the monitoring device 30-2 installed in the monitoring target site 2, the monitoring data indicated by {monitoring device: "monitoring device #2", monitoring target site: "monitoring target site #2", time: "time #3", and monitoring data: "monitoring data #2-3"}; detects the event that has occurred in the monitoring target site 2; and outputs, as the detection result, data indicated by {monitoring device: "monitoring device #2", monitoring target site: "monitoring target site #2", and time: "time #3", and event: "event #2-3"}.

At this time, the analysis unit 15b may acquire the detection result that is output by inputting data indicated by {monitoring device: "monitoring device #1", monitoring target site: "monitoring target site #1", and time: "time #1", monitoring data: "monitoring data #1-1"} as the pieces of monitoring data collected from the monitoring device 30-1 installed in the monitoring target site 1 to the "analysis model #1" as the analysis model AM stored in the analysis model storage unit 14c-1. Moreover, the analysis unit 15b may acquire the detection result that is output by inputting data indicated by {monitoring device: "monitoring device #2", monitoring target site: "monitoring target site #2", time: "time #3", and monitoring data: "monitoring data #2-3"} as the pieces of monitoring data collected from the monitoring device 30-2 installed in the monitoring target site 2 to the "analysis model #2" as the analysis model AM stored in the analysis model storage unit 14c-1.

### Image data analysis process

The analysis unit 15b performs an image data analysis process as the event detection process. For example, the analysis unit 15b detects an event on the basis of the collected image data. At this time, the analysis unit 15b analyzes the image data on the still image acquired by, for example, the camera 30A every seconds, and detects, as an event, on the basis of the difference between the pieces of image data, a person entering a room or leaving the room, a behavior exhibited by a person, a movement of an object installed in a room, or the like. Moreover, the analysis unit 15b is also able to detect an occurred event by using the analysis model AM that outputs an event when the image data on the still image acquired by, for example, the camera 30A every seconds.

### Measurement data analysis process

The analysis unit 15b performs the measurement data analysis process as the event detection process. For example, the analysis unit 15b detects an event on the basis of the collected measurement data. At this time, the analysis unit 15b analyzes the measurement data that is related to a temperature, humidity, noise, an intrusion detection signal, a human presence detection signal, a gas detection signal, or the like and that has been acquired by, for example, the sensor 30B every seconds, and detects an abnormal state of the room, or the like as an event on the basis of a default value of each of the pieces of measurement data. Moreover, the analysis unit 15b is also able to detect an occurred event by using the analysis model AM that outputs an event when the measurement data on the temperature, the humidity, the noise, the intrusion detection signal, the human presence detection signal, the gas detection signal, or the like that has been acquired by, for example, the sensor 30B every seconds is input.

### 2-2-5-3. Generation unit 15c

The generation unit 15c generates various kinds of information. Furthermore, the generation unit 15c may acquire various kinds of information from the storage unit 14-1. Moreover, the generation unit 15c may also store various kinds of information in the storage unit 14-1. In the following, the monitoring report generation process (an event details generation process, an event outline generation process, an event statistical value generation process, a degree of importance specifying process, and a multimedia report generation process) will be described.

### Monitoring report generation process

The generation unit 15c performs the monitoring report generation process. For example, the generation unit 15c uses the generation model GM that is the machine learning model that outputs, when the detection result is input, the text data that indicates the content of the event that has occurred in the monitoring target area, and generates a monitoring report including the output text data.

A specific example will be described. The generation unit 15c acquires the text data that is output by inputting data indicated by {monitoring device: "monitoring device #1", monitoring target site: "monitoring target site #1", time: "time #1", and event: "event #1-1"}, {monitoring device: "monitoring device #2", monitoring target site: "monitoring target site #2", time: "time #3", and event: "event #2-3"}, or the like as the detection result of the event that has occurred in the monitoring target area to the "generation model #1" that is the generation model GM and that is stored in the generation model storage unit 14d, and then, generates the monitoring report of the "monitoring report #1" that includes the acquired text data.

At this time, the generation unit 15c inputs, together with the detection result of the event that has occurred in the monitoring target area, a prompt for designating the type of the monitoring report (for example, an event detail, an event outline, a statistical value, or a multimedia report), the upper limit of the number of characters of the event outline or the statistical value, a classification of the operator O (for example, a proficiency level of "high", "medium", or "low"), the language (for example, the Japanese language, the English language, or the Chinese language), or the like to the generation model GM, whereby the generation unit 15c is also able to generate the monitoring report in accordance with the designated content or format.

### Event details generation process

The generation unit 15c performs the event details generation process as the monitoring report generation process. For example, the generation unit 15c generates the monitoring report by using the generation model GM that outputs the text data that indicates the explanatory text containing the details of the event when the detection result is input.

In the following, a specific example of the explanatory text (event details) that indicates the details of the event will be described. For example, in a case where the generation unit 15c outputs only the event details as the monitoring report, the generation unit 15c generates a monitoring report including the event details indicating that "the events occurred in a monitoring point A from 6:00 a.m. to 6:00 p.m. on mm/dd (mm: month, and dd: date) as follows: (1) Three employees entered a × × conference room at 10:00 a.m. and were seated for an activity, and all of the three employees left the room at 11:05 a.m., (2) Two employees entered the × × conference room from a main gate entrance at 12:05 p.m. and were seated for a meal, and all of the two employees left the room at 12:50 p.m., (3) One employee and three non-registered persons entered the × × conference room from an employee entrance at 3:15 p.m. and were seated for the meeting, and all the members left the room at 4:25 p.m., and (4) A noise level that has exceeded the default value indicated by the value of □ dB on a floor 401 at 3:50 p.m..", or the like.

### Event outline generation process

The generation unit 15c performs the event outline generation process as the monitoring report generation process. For example, the generation unit 15c generates a monitoring report by using the generation model GM that outputs the text data that indicates the explanatory text of the outline of the event when the detection result is input.

In the following, a specific example of the explanatory text (event outline) that indicates the outline of the event will be described. For example, in a case where the generation unit 15c outputs only the event outline as the monitoring report, the generation unit 15c generates the monitoring report including the event outline indicating that "A usage event has occurred three times in the × × conference room from 6:00 a.m. to 6:00 p.m. on mm/dd (mm: month, and dd: date), and a total of 10 persons entered and left the room. The noise level has exceeded the default value once on the floor 401.", or the like.

Furthermore, in a case where the generation unit 15c outputs both of the event outline and the event details as the monitoring report, the generation unit 15c generates the monitoring report describing the event outline indicating that "a usage event has occurred three times in the × × conference room from 6:00 a.m. to 6:00 p.m. on mm/dd (mm: month, and dd: date), and a total of 10 persons entered the room. The noise level has exceeded the default value once on the floor 401.", or the like at the beginning of the monitoring report, and including the event details after the event outline indicating that "The events that have occurred at a monitoring point A from 6:00 a.m. to 6:00 p.m. on mm/dd (mm: month, and dd: date) are as follows: (1) Three employees entered the × × conference room at 10:00 a.m. and were seated for an activity, and all of the three employees left the room at 11:05 a.m., (2) Two employees entered the × × conference room from a main gate entrance at 12:05 p.m. and were seated for a meal, and all of the two employees left the room at 12:50 p.m., (3) One employee and three non-registered persons entered the × × conference room from an employee entrance at 3:15 p.m. and were seated for the meeting, and all the members left the room at 4:25 p.m., and (4) A noise level that has exceeded the default value indicated by the value of □ dB on the floor 401 at 3:50 p.m..", or the like.

### Event statistical value generation process

The generation unit 15c performs the event statistical value generation process as the monitoring report generation process. For example, the generation unit 15c generates a monitoring report by using the generation model GM that outputs the text data that indicates the statistical value of the event when the detection result is input.

In the following, a specific example of the statistical value (event statistical value) of the event will be described. For example, in a case where the generation unit 15c outputs only the event statistical value as the monitoring report, the generation unit 15c generates the monitoring report including the event statistical value indicating that "A total of 10 persons used the × × conference room from 6:00 a.m. to 6:00 p.m. on mm/dd (mm: month, and dd: date), a detection count of noise abnormality was once, a detection count of temperature abnormality was zero times.", or the like.

Furthermore, in a case where the generation unit 15c outputs both of the event statistical value and the event details as the monitoring report, the generation unit 15c generates the monitoring report describing the event statistical values indicating that "A total of 10 persons used the × × conference room from 6:00 a.m. to 6:00 p.m. on mm/dd (mm: month, and dd: date), a detection count of noise abnormality was once, a detection count of temperature abnormality was zero times.", or the like at the beginning of the monitoring report, and including the event details after the event statistical values indicating that "The events that have occurred at a monitoring point A from 6:00 a.m. to 6:00 p.m. on mm/dd (mm: month, and dd: date) are as follows: (1) Three employees entered the × × conference room at 10:00 a.m. and were seated for an activity, and all of the three employees left the room at 11:05 a.m., (2) Two employees entered the × × conference room from a main gate entrance at 12:05 p.m. and were seated for a meal, and all of the two employees left the room at 12:50 p.m., (3) One employee and three non-registered persons entered the × × conference room from an employee entrance at 3:15 p.m. and were seated for the meeting, and all the members left the room at 4:25 p.m., and (4) A noise level that has exceeded the default value indicated by the value of □ dB on the floor 401 at 3:50 p.m..", or the like.

### Degree of importance specifying process

The generation unit 15c performs a degree of importance specifying process as the monitoring report generation process. For example, the generation unit 15c specifies the degree of importance associated with an event, and generates a monitoring report that indicates the content of the event and that includes text data in accordance with the condition assigned to the degree of importance.

At this time, in a case where the degree of importance associated with the event is equal to or greater than a first threshold, the generation unit 15c generates, as the text data, a monitoring report that includes an explanatory text that is related to the event and that does not have the upper limit of the number of characters. In other words, in a case where the degree of importance is high, the generation unit 15c generates the monitoring report, as the text data, that includes the event details or the event outline for the purpose of clearly delivering the content of the event to the operator O, regardless of the total number of characters that has been designated in advance.

Furthermore, in a case where the degree of importance associated with the event is less than the first threshold and is equal to or greater than a second threshold, the generation unit 15c generates a monitoring report, as the text data, at least one of an explanatory text describing the event and the statistical value of the event within the range of the upper limit of the number of characters. In other words, in a case where the degree of importance is a medium level, the generation unit 15c generates the monitoring report, as the text data, that includes the event details, the event outline, the event statistical value of the number of event occurrences or the frequency of event occurrences, or the like for the purpose of clearly delivering the content of the event to the operator O and for the purpose of briefly delivering the content of the event to the operator O within the range of the upper limit of the number of characters. Moreover, the generation unit 15c is also able to generate the monitoring report including the event details, the event outline, the event statistical value of the number of event occurrences or the frequency of event occurrences, or the like within the range of a replay time that is used for a replay of audio data, instead of within the range of the total number of characters that has been designated in advance.

Furthermore, in a case where the degree of importance associated with the event is less than the second threshold, the generation unit 15c generates the monitoring report including the text data that indicates the statistical value of the event. In other words, in a case where the degree of importance is low, the generation unit 15c generates the monitoring report, as the text data, including the event statistical value of the number of event occurrences or the frequency of event occurrences for the purpose of briefly delivering the content of the event to the operator O.

In the following, a specific example of the text data that indicates the content of the event with consideration for the degree of importance will be described. For example, in a case where the generation unit 15c takes into account, as the monitoring report, the degree of importance of "high" (for example, the degree of importance of 7 to 9), "medium" (for example, the degree of importance of 4 to 6), and "low" (for example, the degree of importance of 0 to 3), the generation unit 15c generates the monitoring report including the event details, the event outline, and the event statistical value indicating that "The events that have occurred at the monitoring point A from 6:00 a.m. to 6:00 p.m. on mm/dd (mm: month, and dd: date) are as follows: (1) The following events have occurred as the events with the degree of importance of "high": (1-1) Six persons entered the × × conference room at 10:00 a.m., which results in an over capacity state, and held a meeting. Three employees and three non-registered persons were present, held a seated meeting until 11:00 a.m., and left the room at 11:00 a.m., (1-2) A person in charge of accounts opened and closed a safe in a vault at 10:30 a.m. and at 2:20 p.m., (1-3) An alarm sound of a PC rang at 5:40 p.m. on a floor 301, and kept ringing 10 minutes until 5:50 p.m.; (2) The following are reports on the events with the degree of importance of "medium": The number of users at the monitoring point A today excluding the events reported above indicated by the degree of importance of "high" is eight; and (3) Regarding the events with the degree of importance of "low", 16 events have occurred in this period.", or the like. Furthermore, in a case where the generation unit 15c takes into account the degree of importance of the "highest " (for example, the degree of importance of 10), the generation unit 15c is also able to generate an alarm that is used to notify the operator O, together with the monitoring report.

### Multimedia report generation process

The generation unit 15c performs the multimedia report generation process as the monitoring report generation process. For example, the generation unit 15c generates the monitoring report including the audio data that indicates the content of the event, together with the text data that indicates the content of the event. Moreover, the generation unit 15c generates the monitoring report including the audio data that indicates the content of the event and the video image data that has been synchronized with the audio data, together with the text data that indicates the event.

A specific example will be described. The generation unit 15c acquires, as the monitoring report that is output from the "generation model #1" as the generation model GM, the "monitoring report #1" including "text data #1" that is the text data and "audio data #1" that is the audio data obtained by converting the text data into replayable data. Furthermore, the generation unit 15c acquires, as the monitoring report that is output from the "generation model #1" as the generation model GM, the "monitoring report #1" including the "text data #1" that is the text data, the "audio data #1" that is the audio data obtained by converting the text data into replayable data, and "video image data #1" that is the video image data obtained when the event has occurred.

### 2-2-5-4. Notification unit 15d

The notification unit 15d notifies various kinds of information. Furthermore, the notification unit 15d may acquire various kinds of information from the storage unit 14-1. In the following, a monitoring report notification process will be described.

### Monitoring report notification process

The notification unit 15d performs the monitoring report generation process. For example, the notification unit 15d notifies the operator O of the monitoring report that has been generated by the generation unit 15c.

A specific example will be described. The notification unit 15d acquires the "monitoring report #1" from the monitoring report storage unit 14b as the monitoring report to be notified to the operator O, specifies the operator terminal 20 as the transmission destination of the monitoring report, transmits the "monitoring report #1" to the operator terminal 20, and causes the display of the operator terminal 20 to display the text data of the "text data #1" included in the "monitoring report #1". At this time, the notification unit 15d may replay the audio data of the "audio data #1" and the video image data on the "video image data #1" that are included in the "monitoring report #1". Moreover, the notification unit 15d may cause the display of the operator terminal 20 to display an alarm in a case where the event with the degree of importance of the "highest" has occurred.

### 2-3. Configuration example and process example of operator terminal 20

A configuration example and a process example of the operator terminal 20 will be described with reference again to FIG. 2. The operator terminal 20 is a posting device and a viewing device, and includes an input/output unit 21, a transmission/reception unit 22, and a communication unit 23.

### 2-3-1. Input/output unit 21

The input/output unit 21 manages an input of various kinds of information to the operator terminal 20. For example, the input/output unit 21 is implemented by a mouse, a keyboard, a touch panel, or the like, and receives an input of various kinds of information to the operator terminal 20. Furthermore, the input/output unit 21 manages display of various kinds of information received from the operator terminal 20. For example, the input/output unit 21 is implemented by a display, or the like, and displays various kinds of information stored in the operator terminal 20.

Furthermore, the input/output unit 21 displays the text data included in the monitoring report that has been transmitted from the server device 10-1 that is an information providing apparatus. Furthermore, the input/output unit 21 replays the audio data and the video image data that are included in the monitoring report and that have been transmitted from the server device 10-1.

### 2-3-2. Transmission/reception unit 22

The transmission/reception unit 22 transmits various kinds of information. For example, the transmission/reception unit 22 transmits the setting information that has been input by the operator O via the setting screen to the server device 10-1.

The transmission/reception unit 22 receives various kinds of information. For example, the transmission/reception unit 22 receives the monitoring report that has been transmitted from the server device 10-1. Moreover, the transmission/reception unit 22 receives the alarm transmitted from the server device 10-1.

### 2-3-3. Communication unit 23

The communication unit 23 manages data communication with the other devices. For example, the communication unit 23 performs data communication with each of the communication devices by way of a router or the like. Furthermore, the communication unit 23 is able to perform data communication with a terminal that is used by an operator (not illustrated).

### 2-4. Configuration example and process example of monitoring device 30

A configuration example and a process example of the monitoring device 30 will be described with reference again to FIG. 2. For example, the monitoring device 30 is implemented by the camera 30A that is an image capturing device, such as a security camera or a monitoring camera, that is installed in the facility, or the like managed by the operator O, or the sensor 30B that is a measurement device, such as a thermometer, a hygrometer, a noise level meter, an intrusion detection sensor, a human presence detection sensor, or a gas detector, that is installed in the facility, or the like managed by the operator O. The monitoring device 30 includes an acquisition unit 31 and a communication unit 32.

### 2-4-1. Acquisition unit 31

The acquisition unit 31 acquires monitoring data. For example, the acquisition unit 31 acquires image data, audio data, or the like on a still image or a moving image by capturing an image of the interior of the facility every seconds. Moreover, the acquisition unit 31 acquires measurement data on humidity, noise, an intrusion detection signal, a human presence detection signal, a gas detection signal, or the like by measuring the interior of the facility every seconds.

The acquisition unit 31 transmits the acquired monitoring data to the server device 10-1. For example, the acquisition unit 31 transmits the acquired image data, the audio data, or the like on the still image or the moving image to the server device 10-1. Moreover, the acquisition unit 31 transmits the acquired measurement data on the humidity, the noise, the intrusion detection signal, the human presence detection signal, the gas detection signal, or the like to the server device 10-1.

### 2-4-2. Communication unit 32

The communication unit 32 manages data communication with the other devices. For example, the communication unit 32 performs data communication with each of the communication devices by way of a router or the like. Furthermore, the communication unit 32 is able to perform data communication with a terminal that is used by an operator (not illustrated).

### 3. Flow of each process performed in cyclic monitoring system 100-1

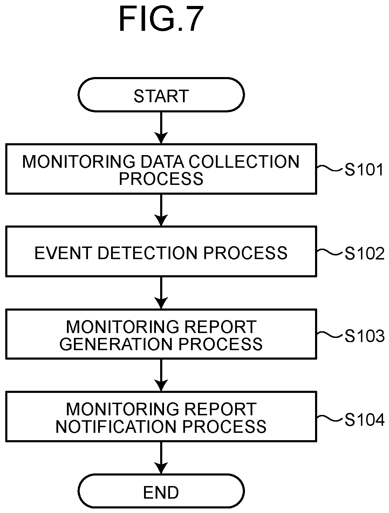

The flow of the process performed in the cyclic monitoring system 100-1 according to the embodiment will be described with reference to FIG. 7. Furthermore, the processes performed at Steps S101 to S104 described below may be performed in different order. Moreover, some of the processes performed at Steps S101 to S104 described below may be omitted.

### 3-1. Monitoring data collection process

At a first step, the server device 10-1 performs the monitoring data collection process (Step S101). For example, the server device 10-1 collects pieces of image data on the still images or the like captured every seconds from the camera 30A that is installed in each of the monitoring target sites. Moreover, the server device 10-1 collects pieces of measurement data on a temperature or the like measured every seconds from the sensor 30B that is installed in each of the monitoring target sites.

### 3-2. Event detection process

At a second step, the server device 10-1 performs the event detection process (Step S102). For example, the server device 10-1 analyzes the image data, and detects the person appearing the monitoring target site, the behavior exhibited by the person, or the like as the event. Moreover, the server device 10-1 analyzes the measurement data, and detects the abnormal state of the room temperature, the noise, or the like occurred in the monitoring target site as the event. At this time, the server device 10-1 is also able to detect each of the events occurred in the corresponding monitoring target sites by using the analysis model AM that outputs the event when the monitoring data is input.

### 3-3. Monitoring report generation process

At a third step, the server device 10-1 performs the monitoring report generation process (Step S103). For example, the server device 10-1 uses the generation model GM that is the language generation model, and generates the monitoring report including the text data that indicates the content of the event that has occurred in the monitoring target area. At this time, the server device 10-1 is also able to generate the monitoring report that includes the text data in accordance with the degree of importance associated with the event. Furthermore, the server device 10-1 is also able to generate the monitoring report that includes the audio data or the video image data together with the text data.

### 3-4. Monitoring report notification process

At a fourth step, the server device 10-1 performs the monitoring report notification process (Step S104). For example, the server device 10-1 transmits the generated monitoring report to the operator terminal 20, and causes the monitor of the operator terminal 20 to display a text that indicates the details, the outline, or the statistical values of the event. Moreover, in addition to displaying the text that indicates the details, the outline, or the statistical values of the event, the server device 10-1 is also able to cause the operator terminal 20 to read out the text or display the synchronized video image. Furthermore, the server device 10-1 is also able to cause the monitor of the operator terminal 20 to display an alarm.

### 4. Effects of the first embodiment

Lastly, the effects of the first embodiment will be described. In the following, a first to a ninth effects associated with the processes according to the first embodiment will be described.

### 4-1. First effect

As the first effect, in the process according to the above described embodiment, the server device 10-1 collects pieces of monitoring data acquired by the monitoring device 30 that is installed in each of the plurality of monitoring target sites included in the monitoring target area, detects the event that has occurred in each of the plurality of monitoring target sites on the basis of the collected monitoring data, uses the generation model GM that outputs the text data that indicates the content of the event that has occurred in the monitoring target area when the detection result is input, and generates the monitoring report including the output text data. As a result of this, in this process, it is possible to effectively recognize the event that has occurred in the monitoring target area.

### 4-2. Second effect

As the second effect, in the process according to the above described embodiment, the server device 10-1 collects, as the monitoring data, the image data acquired by the camera 30A installed in each of the plurality of monitoring target sites, detects the event in the monitoring target site on the basis of the collected image data, uses the generation model GM that outputs the text data that indicates the content of the event when the detection result is input, and generates the monitoring report that includes the output text data. As a result of this, in this process, it is possible to effectively recognize the event that has occurred in the monitoring target area by detecting, on the basis of the image analysis, the event that has occurred in the monitoring target site.

### 4-3. Third effect

As the third effect, in the process according to the above described embodiment, the server device 10-1 collects, as the monitoring data, the pieces of measurement data acquired by the sensor 30B installed in each of the plurality of monitoring target sites, detects the event in the monitoring target site on the basis of the collected measurement data, users the generation model GM that outputs the text data that indicates the content of the event when the detection result is input, and generates the monitoring report that includes the output text data. As a result of this, in this process, it is possible to effectively recognize the event that has occurred in the monitoring target area by detecting, on the basis of the sensor analysis, the event that has occurred in the monitoring target site.

### 4-4. Fourth effect

As the fourth effect, in the process according to the above described embodiment, the server device 10-1 specifies the degree of importance associated with the event, and generates the monitoring report including the text data that indicates the content of the event in accordance with the condition assigned to the specified degree of importance. As a result of this, in this process, it is possible to effectively recognize the event that has occurred in the monitoring target area by generating the text data in accordance with the degree of importance of the event.

### 4-5. Fifth effect

As the fifth effect, in the process according to the above described embodiment, in a case where the degree of importance associated with the event is equal to or greater than the first threshold, the server device 10-1 generates, as the text data, the monitoring report including the explanatory text that is related to the event and that does not have the upper limit of the number of characters. As a result of this, in this process, it is possible to effectively recognize the event that has occurred in the monitoring target area by generating the text data that clearly explains the content of the event with a high degree of importance.

### 4-6. Sixth effect

As the sixth effect, in the process according to the above described embodiment, in a case of the degree of importance associated with the event is less than the first threshold and is equal to or greater than the second threshold, the server device 10-1 generates, as the text data, the monitoring report that includes at least one of the explanatory text related to the event and the statistical value of the event within the range of the upper limit of the number of characters. As a result of this, in this process, it is possible to effectively recognize the event that has occurred in the monitoring target area by generating the text data in which the content of the event with the degree of importance of about medium is explained by using the designated number of characters, or less.

### 4-7. Seventh effect

As the seventh effect, in the process according to the above described embodiment, in a case where the degree of importance associated with the event is less than the second threshold, the server device 10-1 generates, as the text data, the monitoring report including the statistical value of the event. As a result of this, in this process, it is possible to effectively recognize the event that has occurred in the monitoring target area by generating the text data in which the content of the event with a low degree of importance is briefly explained.

### 4-8. Eighth effect

As the eighth effect, in the process according to the above described embodiment, the server device 10-1 generates the monitoring report including the audio data that indicates the content of the event, together with the text data that indicates the content of the event. As a result of this, in this process, it is possible to effectively recognize the event that has occurred in the monitoring target area by reading out the content of the event with voice.

### 4-9. Ninth effect

As the ninth effect, in the process according to the above described embodiment, the server device 10-1 generates the monitoring report that includes the video image data that has been synchronized with the audio data and the audio data indicating the content of the event, together with the text data that indicates the content of the event. As a result of this, in this process, it is possible to effectively recognize the event that has occurred in the monitoring target area by reading out the content of the event with voice and also displaying the video image of the event.

### Second Embodiment

In the following, a configuration and a process of a cyclic monitoring system 100-2 according to the second embodiment, a configuration and a process of each of the devices included in the cyclic monitoring system 100-2, and the flow of the process performed in the cyclic monitoring system 100-2 will be described in this order, and, at the end, the effects of the second embodiment will be described Furthermore, descriptions of the configuration and the processes that are the same as those described above in the embodiment will be omitted.

### 1. Configuration process related to cyclic monitoring system 100-2

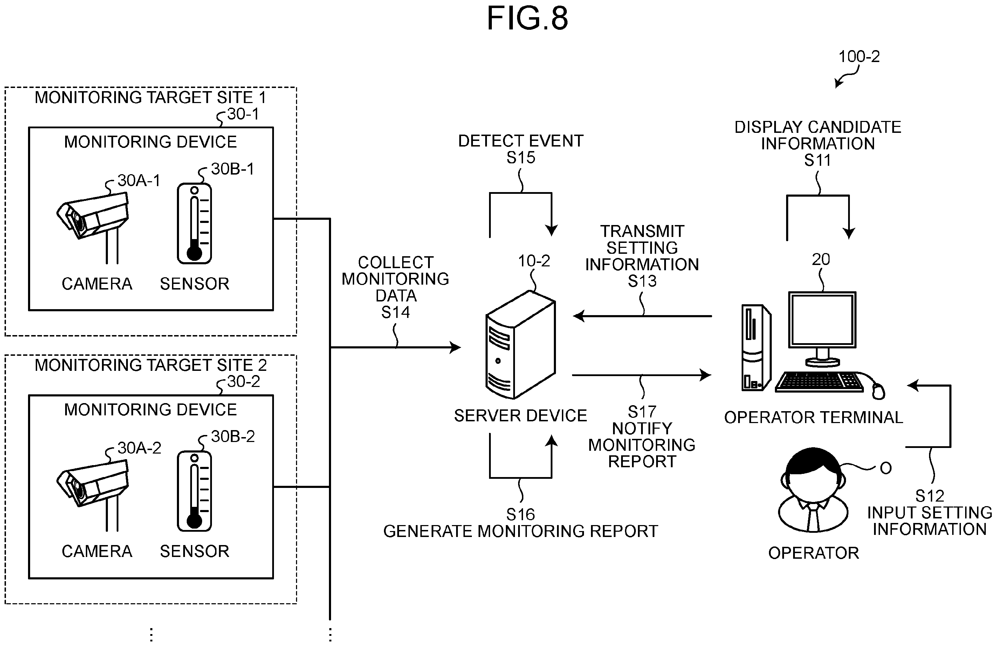

A configuration and a process of the cyclic monitoring system 100-2 according to the second embodiment will be described in detail with reference to FIG. 8. FIG. 8 is a diagram illustrating a configuration example and a process example of the cyclic monitoring system 100-2 according to the second embodiment. In the following, an example of the overall configuration of the cyclic monitoring system 100-2, an example of the process performed in the cyclic monitoring system 100-2, and the effects of the cyclic monitoring system 100-2 will be described.

### 1-1. Example of overall configuration of cyclic monitoring system 100-2

The cyclic monitoring system 100-2 includes a server device 10-2, the operator terminal 20, and the monitoring device 30. Here, the server device 10-2, the operator terminal 20, and the monitoring device 30 are connected to one another via a predetermined communication network (not illustrated) so as to be able to communicate each other in a wired or wireless manner. Furthermore, various kinds of communication networks, such as the Internet or a dedicated line, may be used for the predetermined communication network.

### 1-1-1. Server device 10-2

The server device 10-2 is an information providing apparatus that analyzes monitoring data (image data and measurement data) collected from the monitoring device 30, and that generates a monitoring report. For example, the server device 10-2 is implemented by a cloud environment, an on-premise environment, an edge environment, or the like. Furthermore, in the cyclic monitoring system 100-2 illustrated in FIG. 8, two or more of the server devices 10-2 may be included.

### 1-1-2. Operator terminal 20

The operator terminal 20 is an administrator terminal that is used by the operator O who is an administrator of a monitoring target area. Furthermore, two or more of the operator terminals 20 may be included in the cyclic monitoring system 100-2 illustrated in FIG. 8.

### 1-1-3. Monitoring device 30

The monitoring device 30 is a monitoring device that is installed in each of the monitoring target sites included in the monitoring target area, and is implemented by the camera 30A, the sensor 30B, or the like. Here, the camera 30A is an image capturing device, such as a security camera or a monitoring camera, installed in, for example, each of the monitoring target sites. Furthermore, the sensor 30B is a measurement device, such as a thermometer, a hygrometer, a noise level meter, an intrusion detection sensor, a human presence detection sensor, or a gas detector, installed in, for example, each of the monitoring target sites.

### 1-2. Example of overall process performed in cyclic monitoring system 100-2

The overall process performed in the cyclic monitoring system 100-2 described above will be described. Furthermore, the processes performed at Steps S11 to S17 described below may be performed in different order. Moreover, some of the processes performed at Steps S11 to S17 may be omitted.

### 1-2-1. Candidate information display process

At a first step, the operator terminal 20 displays candidate information (Step S11). For example, the operator terminal 20 displays, on a monitor, a setting screen in which a list of the identification information on the AI logic for each analysis category, an output value list for each AI logic, or the like is presented as the candidate information.

Here, the analysis category is a classification of an analysis target, and is, for example, a "motion of a person" that indicates a behavior of a person analyzed from the image data, "person recognition" that indicates an attribute of the person (for example, name, belonging department, authority, gender, age, etc.) analyzed from the image data, "identification of a thing" that indicates an object that is linked to the behavior exhibited by the person and that is analyzed from the image data, and the like. Moreover, the analysis category is, for example, an "abnormality type" that indicates the type of abnormality analyzed from the measurement data, an "abnormality cause" that indicates a cause of the abnormality analyzed from the measurement data, and the like.

The "motion of a person" is an analysis target used in the image analysis, and is an analysis category associated with "what did you do" corresponding to a behavior of a person indicating a behavior of, for example, "entering a room", "leaving a room", "taking out", "leaving behind", "using violence", "falling down", "vomiting", "crying", or the like.

Furthermore, the above described "motion of a person" is an example of a case of a behavior that is detected in a case where the target for the behavior analysis is a person. As another example other than this, in a case where the target for the behavior analysis is a robot or a construction machine, a motion of the robot or the construction machine "grabbing", "lifting", "installing", "digging", or the like may be used as a target. Moreover, in a case where the target for the behavior analysis is an animal, a motion of the animal may also be the detection target.

The "person recognition" is an analysis target used in the image analysis, and is an analysis category associated with "who" corresponding to an attribute of a person indicating, for example, a "pre-registered person: authority A", a "pre-registered person: authority B", a "non-registered person", or the like.

Moreover, the above described "person recognition" is an example of a case in which a target for the behavior analysis is a person. As another example other than this, in a case where a location in which a person and a robot operate in cooperation with each other is targeted for an image to be captured, a robot may be included, or a vehicle for work, such as a construction machine, may also be a target. Moreover, an animal may also be a target.

The "identification of a thing" is an analysis target used in the image analysis, and is an analysis category associated with "what" corresponding to an object that is linked to a behavior of a person and that indicates, for example, a "desk", a "chair", a "cardboard box", a "locker", a "file", a "safe", a "personal seal", a "foliage plant", a "shredder", or the like.

The "abnormality type" is an analysis target used in the sensor analysis, and is an analysis category associated with "what is" corresponding to a classification of an abnormal state that indicates, for example, "temperature abnormality", "humidity abnormality", "noise abnormality", "intrusion detection abnormality", "person detection abnormality", "gas detection abnormality", or the like.

The "abnormality cause" is an analysis target used in the sensor analysis, and is an analysis category associated with "why" that is a cause of the abnormal state indicating, for example, a "failure", a "human factor", an "external factor", or the like.

Furthermore, the AI logic mentioned here is an analysis technique that is implemented by an analysis model AM that is a trained machine learning model that outputs the analysis targets. Moreover, the output value list mentioned here is a list of analysis items that are the analysis targets output by each of the AI logics. Here, the output value list may be a list of shared analysis items.

### 1-2-2. Setting information input process

At a second step, the operator O inputs setting information to the operator terminal 20 (Step S12). For example, the operator O inputs, as the setting information, selection of the AI logic that is used for an analysis by selecting the identification information on an arbitrary AI logic from the list of the identification information on the AI logic for each analysis category.

At this time, as the selection of the AI logic, the operator O selects an "AI logic 1" as {analysis category 1: motion of a person}, selects an "AI logic A" as {analysis category 2: person recognition}, and selects an "AI logic W" as {analysis category 3: identification of a thing}, for example.

Furthermore, the operator O inputs the degree of importance that is associated with the event as the setting information by selecting, for each analysis category, an analysis item that is output by the selected AI logic, and assigning the degree of importance to the event that is a combination of the selected analysis items. At this time, the operator O may also input a reaction that is executed by the server device 10-2 and that is associated with the degree of importance as the setting information.

At this time, the operator O assigns, as the degree of importance, a "degree of importance 8" that indicates urgency to the event that is the combination of the analysis items of, for example, {"who": "non-registered person", "when": "weekday business hours", and "what": "file", "what did you do": "taking out"}. In the same way, the operator O assigns the degree of importance to each of the combinations of the other analysis items as the event that is desired to be detected.

### 1-2-3. Setting information transmission process

At a third step, the operator terminal 20 transmits the setting information to the server device 10-2 (Step S13). For example, the operator terminal 20 transmits, to the server device 10-2, selection of the AI logic for each analysis category, the degree of importance associated with event, the reaction associated with the degree of importance, and the like, which are input to the operator terminal 20 by the operator O, as the setting information. At this time, the server device 10-2 stores therein the received setting information.

### 1-2-4. Monitoring data collection process

At a fourth step, the server device 10-2 collects pieces of monitoring data from the monitoring device 30 (Step S14). For example, the server device 10-2 collects pieces of image data on the still images that have been captured every seconds from the camera 30A (30A-1, 30A-2, and ...) installed in each of the monitoring target sites. Moreover, the server device 10-2 collects pieces of measurement data on the temperature that has been measured every seconds from the sensor 30B (30B-1, 30B-2, and ...) installed in each of the monitoring target sites.

At this time, the server device 10-2 stores therein the collected pieces of monitoring data together with the image capturing time or the measurement time period. Furthermore, the image data may be image data on a moving image or data including audio data. Moreover, the measurement data may be data on humidity, noise, an intrusion detection signal, a human presence detection signal, a gas detection signal, or the like.

### 1-2-5. Event detection process

At a fifth step, the server device 10-2 detects an event (Step S15). For example, the server device 10-2 detects the event by referring to the setting information, and analyzing the monitoring data using the AI logic that has been selected for each analysis category by the operator O. At this time, the server device 10-2 inputs the monitoring data to the analysis model AM associated with each of the AI logics, acquires the analysis item that is the output analysis target for each analysis category, and specifies the combination of the acquired analysis items as an event.

In other words, as an explanation of the above described example, the server device 10-2 inputs image data to an analysis model AM-A associated with the "AI logic A" as {analysis category 2: person recognition}, and acquires the analysis item that is associated with "who". Moreover, the server device 10-2 specifies the image capturing time of the image data, and acquires the analysis item that is associated with "when". Moreover, the server device 10-2 inputs image data to an analysis model AM-W associated with the "AI logic W" as {analysis category 3: identification of a thing}, and acquires the analysis item that is associated with "what". Moreover, the server device 10-2 inputs image data to an analysis model AM-1 associated with the "AI logic 1" as {analysis category 1: motion of a person}, and acquires the analysis item that is associated with "what did you do". Then, the server device 10-2 specifies the combination of the analysis items of "who", "when", "what", and "what did you do" as an event.

### 1-2-6. Monitoring report generation process

At a sixth step, the server device 10-2 generates a monitoring report (Step S16). For example, the server device 10-2 generates a monitoring report including the text data that indicates the content of the event that has occurred in the monitoring target area. At this time, when the detection result of the event is input, the server device 10-2 generates, by using the generation model GM that outputs the text data that indicates the content of the event, the monitoring report that indicates the content of each of the events that have occurred in the corresponding monitoring target sites. Furthermore, the details of the monitoring report generation process are the same as those described above in the first embodiment; therefore, descriptions thereof will be omitted.

### 1-2-7. Monitoring report notification process

At a seventh step, the server device 10-2 notifies the operator O of the monitoring report (Step S17). For example, the server device 10-2 transmits the generated monitoring report to the operator terminal 20, and causes the monitor of the operator terminal 20 to display a text that indicates the details or the outline of the event or the statistical values. Moreover, the server device 10-2 is also able to cause the operator terminal 20 to read out the text or display the synchronized video image, in addition to cause the operator terminal 20 to display the text that indicates the details or the outline of the event or the statistical values.

### 1-3. Effects of cyclic monitoring system 100-2

In the following, the effects of the cyclic monitoring system 100-2 will be described. Furthermore, the outline and problems in a reference technology are the same as those described above in the first embodiment; therefore, descriptions thereof will be omitted.

### 1-3-1. Outline of cyclic monitoring system 100-2

In the cyclic monitoring system 100-2, the following processes are performed. At a first step, the operator terminal 20 displays, on the monitor, a setting screen in which a list of the identification information on the AI logic for each analysis category, and an output value list for each AI logic, or the like is presented as the candidate information. At a second step, the operator O inputs, to the operator terminal 20, selection of the AI logic that is used for analysis, and the degree of importance associated with a combination of the analysis items output by the selected AI logic as the setting information. At a third step, the operator terminal 20 transmits, to the server device 10-2, the selection of the AI logic for each analysis category, the degree of importance of the combination of the analysis items, or the like as the setting information. At a fourth step, the server device 10-2 collects pieces of monitoring data, such as image data and measurement data, from the monitoring device 30 installed in the monitoring target site. At a fifth step, the server device 10-2 analyzes the collected pieces of monitoring data, and detects the event that has occurred in the monitoring target site. At a sixth step, the server device 10-2 generates a monitoring report including a text, voice, and a video image related to the details, the outline, and the statistical value of the event. At a seventh step, the server device 10-2 notifies the operator O of the monitoring report.

### 1-3-2. Effects of cyclic monitoring system 100-2

In the cyclic monitoring system 100-2, in addition to the cyclic monitoring system 100-1 according to the first embodiment, it is possible to detect an event by using the AI logic that has been selected for each analysis category, so that it is possible to detect an event with further accuracy and generate a more accurate monitoring report.

As described above, in the cyclic monitoring system 100-2, it is possible to further effectively recognize the event that has occurred in the monitoring target area.

### 2. Configuration process related to each device included in cyclic monitoring system 100-2

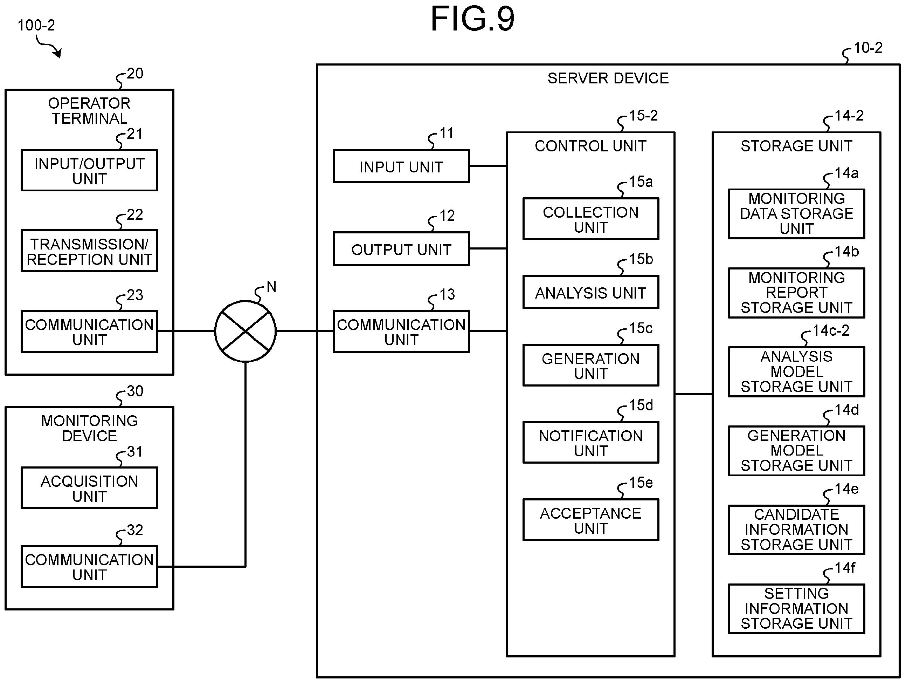

A configuration and a process of each of the devices included in the cyclic monitoring system 100-2 illustrated in FIG. 8 will be described with reference to FIG. 9. FIG. 9 is a block diagram illustrating an example of the configuration of each of the devices included in the cyclic monitoring system 100-2 according to the second embodiment. In the following, an example of the overall configuration of the cyclic monitoring system 100-2 according to the first embodiment will be described first, a configuration example and a process example of the server device 10-1, a configuration example and a process example of the operator terminal 20, and a configuration example and a process example of the monitoring device 30 will be described in detail. Furthermore, the configuration example and the process example related to the monitoring device 30 are the same as those described above in the first embodiment; therefore, descriptions thereof will be omitted.

### 2-1. Example of overall configuration of cyclic monitoring system 100-2

An example of the overall configuration of the cyclic monitoring system 100-2 illustrated in FIG. 8 will be described with reference to FIG. 9. As illustrated in FIG. 9, the cyclic monitoring system 100-2 includes the server device 10-2, the operator terminal 20, and the monitoring device 30. Moreover, the server device 10-2, the operator terminal 20, and the monitoring device 30 are connected to one another via the communication network N implemented by the Internet, a dedicated line, or the like so as to be able to communicate each other in a wired or wireless manner.

The server device 10-2 is installed in a cloud environment, an on-premise environment, an edge environment, or the like. Moreover, the operator terminal 20 is installed in a facility, a monitoring room for equipment, or the like, managed by the operator O. Moreover, the monitoring device 30 is installed in a monitoring target site that is a monitoring site of the facility or the equipment.

### 2-2. Configuration example and process example of server device 10-2

A configuration example and a process example of the server device 10-2 will be described with reference to FIG. 9. The server device 10-2 is an information providing apparatus, and includes the input unit 11, the output unit 12, the communication unit 13, a storage unit 14-2, and a control unit 15-2.

### 2-2-1. Input unit 11

The input unit 11 manages an input of various kinds of information with respect to the server device 10-2. Furthermore, the configuration example and the process example of the input unit 11 are the same as those described above in the first embodiment; therefore, descriptions thereof will be omitted.

### 2-2-2. Output unit 12

The output unit 12 manages an output of various kinds of information received from the server device 10-2. Furthermore, the configuration example and the process example of the output unit 12 are the same as those described above in the first embodiment; therefore, descriptions thereof will be omitted.

### 2-2-3. Communication unit 13

The communication unit 13 manages data communication with the other device. Furthermore, the configuration example and the process example of the communication unit 13 are the same as those described above in the first embodiment; therefore, descriptions thereof will be omitted.

### 2-2-4. Storage unit 14-2

The storage unit 14-2 stores therein various kinds of information that are referred to when the control unit 15-2 operates, or stores therein various kinds of information that have been acquired when the control unit 15-2 operates. The storage unit 14-2 includes the monitoring data storage unit 14a, the monitoring report storage unit 14b, an analysis model storage unit 14c-2, the generation model storage unit 14d, a candidate information storage unit 14e, and a setting information storage unit 14f. Here, the storage unit 14-2 is implemented by, for example, a semiconductor memory device, such as a RAM or a flash memory, a storage device, such as a hard disk or an optical disk, or the like. Furthermore, in the example illustrated in FIG. 9, the storage unit 14-2 is installed in the server device 10-2; however, the storage unit 14-2 may be installed outside the server device 10-2, or a plurality of storage units may be installed.

### 2-2-4-1. Monitoring data storage unit 14a

The monitoring data storage unit 14a stores therein monitoring data. Furthermore, the configuration example and the process example of the monitoring data storage unit 14a are the same as those described above in the first embodiment; therefore, descriptions thereof will be omitted.

### 2-2-4-2. Monitoring report storage unit 14b

The monitoring report storage unit 14b stores therein a monitoring report. Furthermore, the configuration example and the process example of the monitoring report storage unit 14b are the same as those described above in the first embodiment; therefore, descriptions thereof will be omitted.

### 2-2-4-3. Analysis model storage unit 14c-2

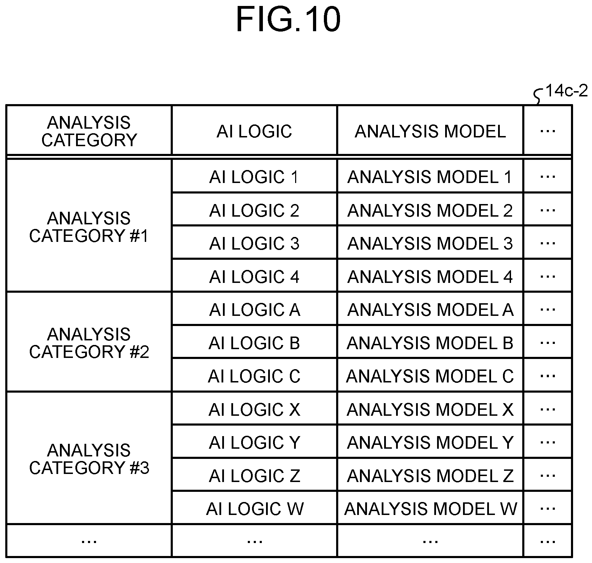

The analysis model storage unit 14c-2 stores therein the analysis model AM. For example, the analysis model storage unit 14c-2 stores therein the plurality of analysis models AM that are machine learning models used by the analysis unit 15b that will be described later included in the control unit 15-2 and that outputs the analysis targets included in the monitoring target site when the monitoring data is input. At this time, the analysis model storage unit 14c-2 stores therein the plurality of analysis models AM for each analysis category of the analysis target that will be output. In the following, one example of data stored in the analysis model storage unit 14c-2 will be described with reference to FIG. 10. FIG. 10 is a diagram illustrating one example of the analysis model storage unit 14c-2 included in the server device 10-2 according to the second embodiment. In the example illustrated in FIG. 10, the analysis model storage unit 14c-2 includes items of an "analysis category", an "AI logic", an "analysis model", and the like.

The "analysis category" indicates identification information for identifying a classification of the analysis targets, and is, for example, an identification number or an identification symbol of a classification of a behavior of a person, an attribute of the person, an object linked to the behavior of the person, a type of abnormality, a cause of the abnormality, or the like. The "AI logic" indicates identification information for identifying an AI logic that is analyzable by the server device 10-2, and is, for example, an identification number or an identification symbol of the AI logic. The "analysis model" is model data on the machine learning model associated with the "AI logic", and is, for example, data including execution data for performing the algorithms for the analysis models AM of each of the AI logics, model parameters that are set values, hyperparameters, or the like.

In other words, FIG. 10 illustrates an example in which the analysis model storage unit 14c-2 stores therein data that is related to the analysis category identified by an "analysis category #1" and that is indicated by {AI logic: "AI logic 1", analysis model: "analysis model 1", and ...}, {AI logic: "AI logic 2", analysis model: "analysis model 2", and ...}, {AI logic: "AI logic 3", analysis model: "analysis model 3", and ...}, and {AI logic: "AI logic 4", analysis model: "analysis model 4", and ...}; data that is related to the analysis category identified by an "analysis category #2" and that is indicated by {AI logic: "AI logic A", analysis model: "analysis model A", and ...}, {AI logic: "AI logic B", analysis model: "analysis model B", and ...}, and {AI logic: "AI logic C", analysis model: "analysis model C", and ...}; data that is related to the analysis category identified by an "analysis category #3" and that is indicated by {AI logic: "AI logic X", analysis model: "analysis model X", and ...}, {AI logic: "AI logic Y", analysis model: "analysis model Y", and ...}, {AI logic: "AI logic Z", analysis model: "analysis model Z", and ...}, and {AI logic: "AI logic W", analysis model: "analysis model W", and ...}; and the like.

### 2-2-4-4. Candidate information storage unit 14e

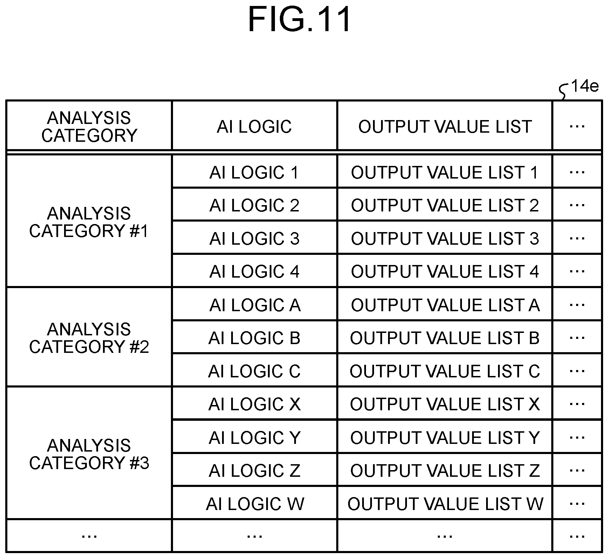

The candidate information storage unit 14e stores therein the candidate information. For example, the candidate information storage unit 14e stores therein the candidate information including the identification information on the AI logic, for each analysis category, that is analyzable by the analysis unit 15b that will be described later and that is included in the control unit 15-2, and an output value list, and the like. Moreover, the analysis category of the analysis target for the image analysis includes, for example, at least one of an attribute of a person, a behavior of the person, and an object linked to the behavior of the person. Moreover, the analysis category of the analysis target for the sensor analysis includes, for example, at least one of a type of abnormality and a cause of the abnormality. In the following, one example of the data stored in the candidate information storage unit 14e will be described with reference to FIG. 11. FIG. 11 is a diagram illustrating one example of the candidate information storage unit 14e included in the server device 10-2 according to the second embodiment. In the example illustrated in FIG. 11, the candidate information storage unit 14e includes items of an "analysis category", an "AI logic", an "output value list", and the like.

The "analysis category" indicates the identification information for identifying a classification of the analysis target, and is an identification number or an identification symbol of a classification of a behavior of a person, an attribute of a person, an object linked to the behavior of the person, a type of abnormality, a cause of the abnormality, and the like. The "AI logic" indicates the identification information for identifying the AI logic that is analyzable by the server device 10-2, and is, for example, an identification number or an identification symbol of the AI logic. The "output value list" is a list of the analysis items that are the analysis targets output by each of the AI logics, and is, for example, a list of the behaviors of the person, a list of the attributes of the person, a list of the objects linked to the behaviors of the person, a list of the types of abnormality, a list of the causes of the abnormality, or the like.

In other words, FIG. 11 illustrates an example in which the candidate information storage unit 14e stores therein data that is related to the analysis category identified by an "analysis category #1" and that is indicated by {AI logic: "AI logic 1", output value list: "output value list 1", and ...}, {AI logic: "AI logic 2", output value list: "output value list 2", and ...}, {AI logic: "AI logic 3", output value list: "output value list 3", and ...}, and {AI logic: "AI logic 4", output value list: "output value list 4", and ...}; data that is related to the analysis category identified by an "analysis category #2" and that is indicated by {AI logic: "AI logic A", output value list: "output value list A", and ...}, {AI logic: "AI logic B", output value list: "output value list B", and ...}, and {AI logic: "AI logic C", output value list: "output value list C", and ...}; data that is related to the analysis category identified by an "analysis category #3" and that is indicated by {AI logic: "AI logic X", output value list: "output value list X", and ...}, {AI logic: "AI logic Y", output value list: "output value list Y", and ...}, {AI logic: "AI logic Z", output value list: "output value list Z", and ...}, and {AI logic: "AI logic W", output value list: "output value list W", and ... }; and the like.

Furthermore, the candidate information storage unit 14e may also include the characteristics of the AI logics or the like as the candidate information. For example, the candidate information storage unit 14e may also store therein the data of, as the characteristics of the AI logics, {AI logic: "AI logic 1", characteristic: "face authentication", and ...}, {AI logic: "AI logic 2", characteristic: "individual recognition based on a manner of walking", and ...}, {AI logic: "AI logic 3", characteristic: "gender age estimation ", and ...}, {AI logic: "AI logic 4", characteristic: "clothes and accessories detection", and ...}, and the like.

### 2-2-4-2. Setting information storage unit 14f

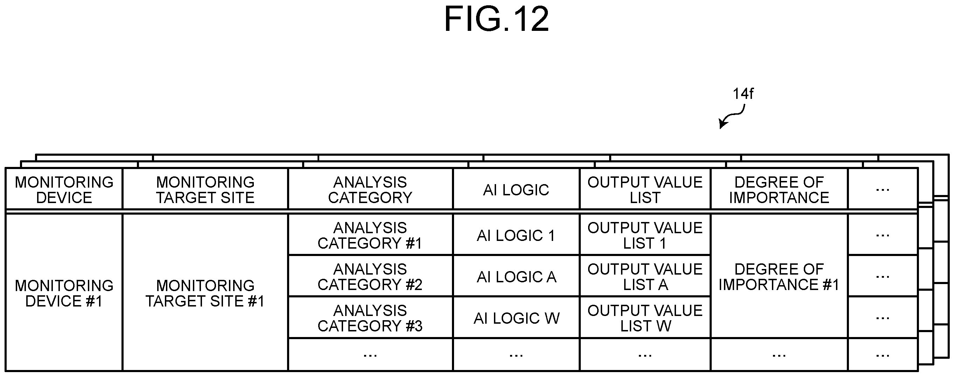

The setting information storage unit 14f stores therein the setting information. For example, the setting information storage unit 14f stores therein the setting information that is input by the operator O via the setting screen, and that includes selection of the AI logic for each analysis category accepted by an acceptance unit 15e that will be described later and that is included in the control unit 15-2, the degree of importance associated with the event, and the like. In the following, one example of the data stored in the setting information storage unit 14f will be described with reference to FIG. 12. FIG. 12 is a diagram illustrating one example of the setting information storage unit 14f included in the server device 10-2 according to the second embodiment. In the example illustrated in FIG. 12, the setting information storage unit 14f includes items of a "monitoring device", a "monitoring target site", an "analysis category", an "AI logic", an "output value list", "degree of importance information", and the like.

The "monitoring device" indicates identification information for identifying an image capturing device or a measurement device, and is, for example, an identification number or an identification symbol of the camera 30A or the sensor 30B. The "monitoring target site" indicates identification information for identifying a facility, equipment, or a section in which the image capturing device or the measurement device is installed in the monitoring target area, and is, for example, an identification number or an identification symbol of the facility, the equipment, or the section. The "analysis category" indicates identification information for identifying a classification of the analysis target, and is, for example, an identification number or an identification symbol of a classification of a behavior of a person, who is the analysis target for the image analysis, an attribute of the person, an object linked to the behavior of the person, or the like, or a classification of a type of abnormality, which is the analysis target for the sensor analysis, a cause of the abnormality, or the like. The "AI logic" indicates identification information for identifying the AI logic that has been accepted by the acceptance unit 15e, and is, for example, an identification number or an identification symbol of the AI logic. The "output value list" is a list of the analysis items that are the analysis targets output from each of the AI logics, and is, for example, a list of behaviors of a person, a list of attributes of the person, a list of objects linked to the behaviors of the person, a list of the types of abnormality, a list of the causes of the abnormality, or the like. The "degree of importance information" is a list of the degrees of importance assigned to an event that is a combinations of the analysis items that are the analysis targets output from each of the AI logic, and is, for example, a list of the degree of importance associated with a combination of each of the analysis items of "who", "when", "what", "what did you do", "what is", "why", or the like, a list of the degree of importance associated with the combination, or the like.

In other words, FIG. 12 illustrates an example in which the setting information storage unit 14f stores therein data that is related to the monitoring device 30 identified by a "monitoring device #1" and the monitoring target site identified by a "monitoring target site #1" and that is indicated by {analysis category: "analysis category #1", AI logic: "AI logic 1", and output value list: "output value list 1"}, {analysis category: "analysis category #2", AI logic: "AI logic A", and output value list: "output value list A"}, {analysis category: "analysis category #3", AI logic: "AI logic W", and output value list: "output value list W"}; data that is related to the degree of importance information and that is indicated by "degree of importance information #1"; and the like.

Furthermore, the setting information storage unit 14f may also include a reaction or the like that is associated with the degree of importance as the setting information. For example, the setting information storage unit 14f may also store data indicated by {degree of importance: "0", and reaction: "event record" }, {degree of importance: "1 to 6", and reaction: "monitoring data record"}, {degree of importance: "7 to 10", and reaction: "monitoring data record" and "alarm notification"}, and the like as the reaction associated with the degree of importance.

### 2-2-5. Control unit 15-2

The control unit 15-2 manages the overall control of the server device 10-2. The control unit 15-2 includes the collection unit 15a, the analysis unit 15b, the generation unit 15c, the notification unit 15d, and the acceptance unit 15e. Here, the control unit 15-2 is implemented by, for example, an electronic circuit, such as a CPU or an MPU, or an integrated circuit, such as an ASIC or a FPGA.

### 2-2-5-1. Collection unit 15a

The collection unit 15a collects various kinds of information. Furthermore, the configuration example and the process example of the collection unit 15a are the same as those described above in the first embodiment; therefore, descriptions thereof will be omitted.

### 2-2-5-2. Analysis unit 15b

The analysis unit 15b analyzes various kinds of information. Furthermore, the analysis unit 15b may acquire various kinds of information from the storage unit 14-2. Moreover, the analysis unit 15b may store the analysis result in the storage unit 14-2. In the following, an event detection process will be described.

### Event detection process

The analysis unit 15b performs the event detection process. For example, the analysis unit 15b inputs the collected monitoring data to the analysis model AM for which selection has been accepted, and detects, in accordance with the output target, an event that has occurred in each of the plurality of monitoring target sites.

A specific example will be described. The analysis unit 15b inputs, as the monitoring data, the data of {monitoring device: "monitoring device #1", monitoring target site: "monitoring target site #1", time: "time #1", and monitoring data: "monitoring data #1-1"} to the "analysis model 1" that is used by the "AI logic 1", and acquires an analysis item "analysis item 1-3" that is an output result. Moreover, the analysis unit 15b inputs, as the monitoring data, the data of {monitoring device: "monitoring device #1", monitoring target site: "monitoring target site #1", time: "time #1", and monitoring data: "monitoring data #1-1"} to the "analysis model A" that is used by the "AI logic A", and acquires an analysis item "analysis item A-3" that is an output result. Moreover, the analysis unit 15b inputs, as the monitoring data, the data of {monitoring device: "monitoring device #1", monitoring target site: "monitoring target site #1", time: "time #1", and monitoring data: "monitoring data #1-1"} to an "analysis model W" that is used by an "AI logic W", and acquires an analysis item "analysis item W-5" that is an output result. Furthermore, the analysis unit 15b acquires an analysis item "analysis item T-1" that indicates occurrence time of the event that is specified by the data of {monitoring device: "monitoring device #1", monitoring target site: "monitoring target site #1", time: "time #1", and monitoring data: "monitoring data #1-1"} as the monitoring data. Then, the analysis unit 15b detects the data of {AI logic 1: "analysis item 1-3", AI logic A: "analysis item A-3", AI logic W: "analysis item W-5", and occurrence time: "analysis item T-1"} as the event that has occurred in the monitoring target site 1.

### 2-2-5-3. Generation unit 15c

The generation unit 15c generates various kinds of information. Furthermore, the configuration example and the process example of the generation unit 15c are the same as those described above in the first embodiment; therefore, descriptions thereof will be omitted.

### 2-2-5-4. Notification unit 15d

The notification unit 15d notifies various kinds of information. Furthermore, the configuration example and the process example of the notification unit 15d are the same as those described above in the first embodiment; therefore, descriptions thereof will be omitted.

### 2-2-5-5. Acceptance unit 15e

The acceptance unit 15e accepts various kinds of information. Furthermore, the acceptance unit 15e may store the accepted various kinds of information in the storage unit 14-2. In the following, a setting screen display control process, an AI logic selection acceptance process, and a degree of importance information acceptance process will be described.

### Setting screen display control process

The acceptance unit 15e performs the setting screen display control process. For example, the acceptance unit 15e presents the list of the plurality of analysis models AM for each analysis category of the analysis target, and causes the user terminal that is used by the user to display an AI logic selection screen, as a setting screen, in which an input of a selection of the analysis model AM is accepted for each analysis category.

A specific example of the AI logic selection screen will be described. The acceptance unit 15e transmits the candidate information to the operator terminal 20 that is used by the operator O, and causes the input/output unit 21 included in the operator terminal 20 to display the data of {"AI logic 1", "AI logic 2", "AI logic 3", and "AI logic 4"} related to the "analysis category #1", the data of {"AI logic A", "AI logic B", and "AI logic C"} related to the "analysis category #2", and the data of {"AI logic X", "AI logic Y", "AI logic Z", and "AI logic W"} related to the "analysis category #3".

Furthermore, the acceptance unit 15e causes the user terminal that is used by the user to display an output value list viewing screen as the setting screen in which a list of the analysis targets that are output from the plurality of analysis models AM is presented.

A specific example of the output value list viewing screen will be described. The acceptance unit 15e transmits the candidate information to the operator terminal 20 that is used by the operator O, and causes the input/output unit 21 included in the operator terminal 20 to display the data of {"analysis item 1-1", "analysis item 1-2", "analysis item 1-3", "analysis item 1-4", "analysis item 1-5", "analysis item 1-6", "analysis item 1-7", and "analysis item 1-8"} related to the "output value list 1" that is desired to be viewed by the operator O.

Furthermore, the acceptance unit 15e presents a list of the analysis targets that are output from the analysis models AM selected for each analysis category of the analysis targets, and causes the user terminal that is used by the user to display a degree of importance setting screen, as the setting screen, that receives an input of a combination of analysis targets for each analysis category and an input of the degree of importance for each of the combinations.

A specific example of the degree of importance setting screen will be described. The acceptance unit 15e transmits the candidate information to the operator terminal 20 that is used by the operator O, and causes the input/output unit 21 included in the operator terminal 20 to display the data of {"analysis item 1-1", "analysis item 1-2", "analysis item 1-3", "analysis item 1-4", "analysis item 1-5", "analysis item 1-6", "analysis item 1-7", and "analysis item 1-8"} related to the "AI logic 1" that has been selected by the operator O; the data of {"analysis item A-1", "analysis item A-2", and "analysis item A-3"} related to the "AI logic A" that has been selected by the operator O; the data of { "analysis item W-1", "analysis item W-2", "analysis item W-3", "analysis item W-4", "analysis item W-5", "analysis item W-6", "analysis item W-7", "analysis item W-8", and "analysis item W-9"} related to the "AI logic W" that has been selected by the operator O; and the data of {"analysis item T-1", "analysis item T-2", and "analysis item T-3"} related to the occurrence time of the event. Then, the acceptance unit 15e causes the input/output unit 21 included in the operator terminal 20 to display an input screen of the "degree of importance" that is to be associated with the combination of the data of { "analysis item 1-3", "analysis item A-3", "analysis item W-5", and "analysis item T-1"} of the analysis items selected by the operator O.

### AI logic selection acceptance process

The acceptance unit 15e performs the AI logic selection acceptance process. For example, the acceptance unit 15e accepts, by accepting selection of the AI logic, selection of the analysis model AM received from the plurality of analysis models AM that are used for the AI logics. At this time, the acceptance unit 15e accepts, by accepting the selection of the AI logic for each analysis category, the selection of the analysis model AM from among the plurality of analysis models AM that are used for the AI logics for each analysis category.

A specific example of the AI logic selection acceptance process will be described. The acceptance unit 15e accepts the data of {analysis category: "analysis category #1", and AI logic: "AI logic 1"}, {analysis category: "analysis category #2", and AI logic: "AI logic A"}, and {analysis category: "analysis category #3", and AI logic: "AI logic W"} as the respective AI logics that are input by the operator O by operating the AI logic selection screen displayed on the monitor of the operator terminal 20, and stores the input data in the setting information storage unit 14f.

### Degree of importance information acceptance process

The acceptance unit 15e performs the degree of importance information acceptance process. For example, the acceptance unit 15e accepts a degree of importance that is associated with a combination of the analysis targets. At this time, the acceptance unit 15e accepts the degree of importance that is associated with the combination of the analysis targets for each analysis category. Moreover, the acceptance unit 15e may also accept a reaction according to the degree of importance.

A specific example of the degree of importance information acceptance process will be described. The acceptance unit 15e accepts, as the degree of importance information that is input by the operator O by operating the degree of importance setting screen displayed on the monitor of the operator terminal 20, the "degree of importance information #1", in which the degree of importance "8" is assigned to the combination of an analysis item "analysis item 1-3" that is output from the "AI logic 1" selected by the "analysis category #1", an analysis item "analysis item A-3" that is output from the "AI logic A" selected by the "analysis category #2", an analysis item "analysis item W-5" that is output from the "AI logic W" selected by the "analysis category #3", and an analysis item "analysis item T-1" indicating the occurrence time of the event, and the like, and stores the accepted information in the setting information storage unit 14f.

### 2-3. Configuration example and process example of operator terminal 20

A configuration example and a process example of the operator terminal 20 will be described with reference again to FIG. 9. The operator terminal 20 is a posting device and a viewing device, and includes the input/output unit 21, the transmission/reception unit 22, and the communication unit 23. A configuration example and a process example of the operator terminal 20 will be described again with reference to FIG. 2. The operator terminal 20 is a posting device and a viewing device, and includes the input/output unit 21, the transmission/reception unit 22, and the communication unit 23.

### 2-3-1. Input/output unit 21

The input/output unit 21 manages an input of various kinds of information with respect to the operator terminal 20. For example, the input/output unit 21 is implemented by a mouse, a keyboard, a touch panel, or the like, and receives an input of various kinds of information to the operator terminal 20. Moreover, the input/output unit 21 manages display of various kinds of information received from the operator terminal 20. For example, the input/output unit 21 is implemented by a display or the like, and displays various kinds of information stored in the operator terminal 20.

Furthermore, the input/output unit 21 displays the candidate information transmitted from the server device 10-2 that is an information providing apparatus. For example, the input/output unit 21 displays an AI logic selection screen, an output value list viewing screen, a degree of importance setting screen, and the like as the setting screen on the basis of the candidate information. Furthermore, the details of the AI logic selection screen will be described later in the section of (2-3-4. First specific example of display screen of operator terminal 20). Moreover, the details of the degree of importance setting screen will be described later in the section of (2-3-5. Second specific example of display screen of operator terminal 20).

Furthermore, the input/output unit 21 displays the text data that is included in the monitoring report that has been transmitted from the server device 10-2. Furthermore, the input/output unit 21 replays the audio data or the video image data that is included in the monitoring report that has been transmitted from the server device 10-2.

### 2-3-2. Transmission/reception unit 22

The transmission/reception unit 22 transmits various kinds of information. For example, the transmission/reception unit 22 transmits the setting information that has been input by the operator O via the setting screen to the server device 10-2.

The transmission/reception unit 22 receives various kinds of information. For example, the transmission/reception unit 22 receives the candidate information transmitted from the server device 10-2. Moreover, the transmission/reception unit 22 receives the monitoring report transmitted from the server device 10-2. Moreover, the transmission/reception unit 22 receives the alarm transmitted from the server device 10-2.

### 2-3-3. Communication unit 23

The communication unit 23 manages data communication with the other devices. Furthermore, the configuration example and the process example of the communication unit 23 are the same as those described above in the first embodiment; therefore, descriptions thereof will be omitted.

### 2-3-4. First specific example of display screen of operator terminal 20

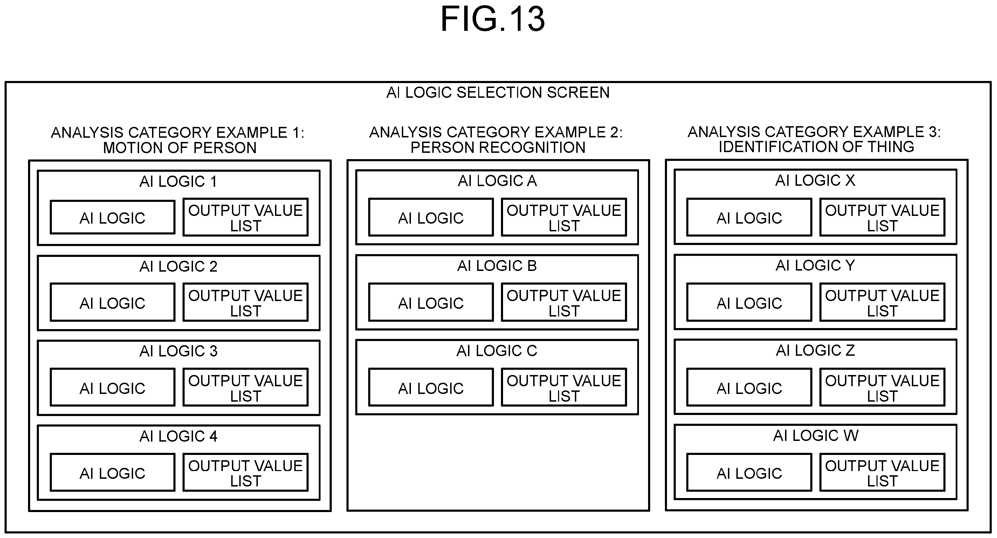

In the following, a first specific example of the display screen that is output by the input/output unit 21 included in the operator terminal 20 will be described with reference to FIG. 13. FIG. 13 is a diagram illustrating the first specific example of the display screen of the operator terminal 20 according to the second embodiment. In a description below, an "AI logic selection screen", a "motion of a person", "person recognition", "identification of a thing", an "AI logic characteristic viewing screen", and an "output value list viewing screen" will be described.

### 2-3-4-1. AI logic selection screen

As indicated by the example illustrated in FIG. 13, the operator terminal 20 displays the "AI logic selection screen" that is the setting screen in which an input of a selection of AI logic (i.e., the analysis model AM) for each analysis category is accepted. Here, the operator O is able to input a selection of the AI logic for each analysis category by performing a click operation on the AI logics that are displayed in each of the items of the "analysis category example 1: motion of a person", the "analysis category example 2: person recognition", and the "analysis category example 3: identification of a thing". Furthermore, in the example illustrated in FIG. 13, the operator terminal 20 displays each of the AI logics that are related to the three analysis categories of the "analysis category example 1: motion of a person", the "analysis category example 2: person recognition", and the "analysis category example 3: identification of a thing" such that each of the AI logics is able to be selected, but the analysis categories displayed by the operator terminal 20 are not limited to the example described above.

### 2-3-4-2. Motion of a person

As indicated by the example illustrated in FIG. 13, the operator terminal 20 displays a "motion of a person" that indicates a behavior of a person as one of the analysis categories. In the example illustrated in FIG. 13, the operator terminal 20 displays the "AI logic 1", the "AI logic 2", the "AI logic 3", and the "AI logic 4" as the AI logic that outputs the "motion of a person". Here, the AI logic that outputs the "motion of a person" is an analysis technique for implementing, for example, motion estimation, skeleton estimation, violent behavior detection, falling detection, person tracking, or the like by inputting the image data, but the analysis technique for outputting the "motion of a person" is not limited to the example described above.

### 2-3-4-3. Person recognition

As indicated by the example illustrated in FIG. 13, the operator terminal 20 displays the "person recognition" that indicates an attribute of a person as one of the analysis categories. In the example illustrated in FIG. 13, the "AI logic A", the "AI logic B", and the "AI logic C" are displayed as the AI logics each of which outputs the "person recognition". Here, the AI logic that outputs the "person recognition" is the analysis technique for implementing, for example, face authentication, individual recognition based on a manner of walking, gender and age estimation, clothes and accessories detection, detection of a person requiring assistance, or the like by inputting the image data, but the analysis technique for outputting the "person recognition" is not limited to the example described above. Moreover, in addition to a person, a target for a behavior analysis may also be a robot, a vehicle for a work, such as a construction machine, an animal, or the like, and a motion performed by each of the targets may also be a target.

Furthermore, the "person recognition" is one example of the AI logic that recognizes a subject, and it is possible to use an AI logic that outputs "animal recognition" for recognizing an animal, "working machine recognition" for recognizing a vehicle for a work, such as a robot or a construction machine, "natural object recognition" for recognizing a natural object, such as a flow of a river or a falling rock, and the like.

### 2-3-4-4. Identification of a thing

As indicated by the example illustrated in FIG. 13, the operator terminal 20 displays "identification of a thing" that indicates an object linked to a behavior of a person as one of the analysis categories. In the example illustrated in FIG. 13, the operator terminal 20 displays the "AI logic Z", the "AI logic Y", the "AI logic X", and the "AI logic W" are displayed as the AI logics each of which outputs the "identification of a thing". Here, the AI logic that outputs the "identification of a thing" is an analysis technique for implementing, for example, object type recognition, vehicle detection, animal recognition, plant recognition, hazardous material detection, or the like obtained by inputting image data, but the analysis technique for outputting the "identification of a thing" is not limited to the above described example.

Furthermore, the "identification of a thing" is one example of the AI logic that identifies an object, and it is also possible to use the AI logic that outputs the above described "person recognition".

### 2-3-4-5. AI logic characteristic viewing screen

The operator terminal 20 is also able to display the "AI logic characteristic viewing screen" that is a setting screen in which the characteristic of the AI logic is presented in order to support an input of the AI logic selected by the operator O. For example, in a case where the operator O performs a click operation on a button of the "AI logic" included in the "AI logic 1" associated with the "analysis category example 1: motion of a person", the operator terminal 20 displays information on "face authentication" or the like that is the characteristic of the "AI logic 1".

### 2-3-4-6. Output value list viewing screen

The operator terminal 20 is also able to display the "output value list viewing screen" that is the setting screen in which the list of the analysis items output by the AI logic is presented in order to support an input of the AI logic selected by the operator O. For example, in a case where the operator O performs a click operation on a button of the "output value list" included in the "AI logic 1" associated with the "analysis category example 1: motion of a person", the operator terminal 20 displays information indicating "entering a room", "leaving a room", "taking out", "leaving behind", "using violence", "falling down", "vomiting", "crying", and the like as the list of the analysis items output by the "AI logic 1".

### 2-3-5. Second specific example of display screen of operator terminal 20

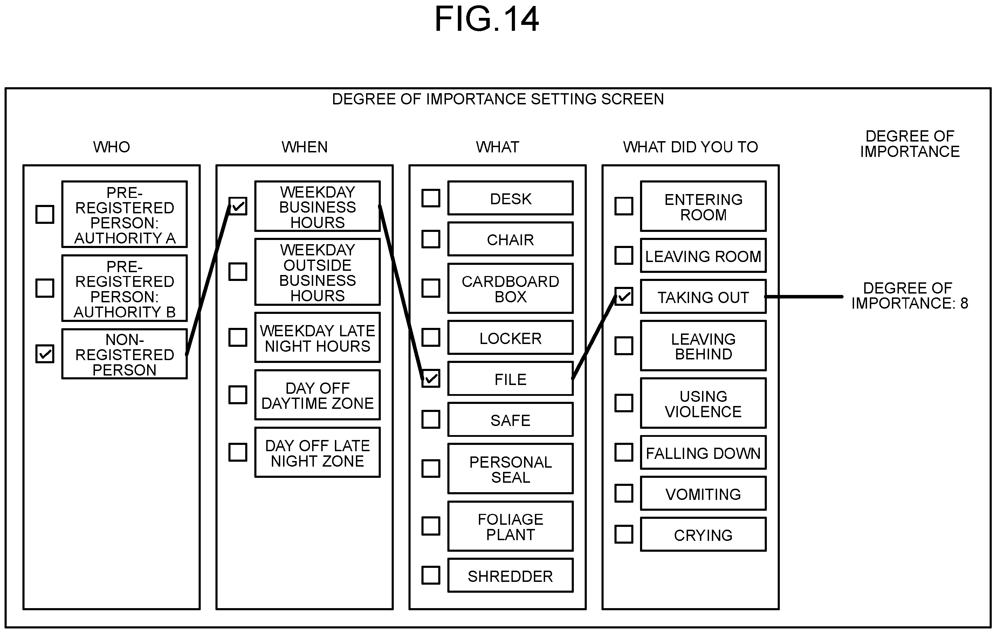

In the following, a second specific example of the display screen that is output by the input/output unit 21 included in the operator terminal 20 will be described with reference to FIG. 14. FIG. 14 is a diagram illustrating the second specific example of the display screen output by the operator terminal 20 according to the second embodiment. In a description below, a "degree of importance setting screen", "person recognition", "occurrence time", "identification of a thing", a "motion of a person", a "degree of importance", and a "reaction" will be described.

### 2-3-5-1. Degree of importance setting screen

As indicated by the example illustrated in FIG. 14, the operator terminal 20 displays the "degree of importance setting screen" that is a setting screen that accepts the degree of importance that is associated with a combination of the analysis items for each analysis category (i.e., an event that will occur). Here, the operator O is able to input the combination of the analysis items for each analysis category by performing a click operation on a checkbox of the analysis item that is displayed on each of the items of "who", "when", "what", and "what did you do". Moreover, the operator O is able to input the "degree of importance" that indicates urgency or the like associated with the combination of the analysis items for each analysis category. Moreover, the operator O is able to input a "reaction" of an alarm notification or the like associated with the degree of importance.

### 2-3-5-2. Person recognition

As indicated by the example illustrated in FIG. 14, the operator terminal 20 displays "who" that is associated with the above described "analysis category example 2: person recognition" as one of the analysis category analysis category. In the example illustrated in FIG. 14, "pre-registered person: authority A", "pre-registered person: authority B", and "non-registered person" are displayed as the analysis items that are output by the AI logics included in the "person recognition" selected by the operator O on the above described "AI logic selection screen". Moreover, the "non-registered person" is selected by an operation performed by the operator O. Furthermore, the analysis items that are output by the AI logics included in the "person recognition" are not limited to the example described above.

At this time, the analysis item that is output by the AI logic included in the "person recognition" may be an analysis item that is directly output by the analysis model AM, or may be an analysis item that is output after an output analysis item has been converted. For example, the analysis model AM may directly output, in accordance with an input of the image data, one of the analysis items among the "pre-registered person: authority A", the "pre-registered person: authority B", and the "non-registered person", or, the analysis model AM may convert an analysis item to one of the analysis items among the "pre-registered person: authority A", the "pre-registered person: authority B", and the "non-registered person" associated with a personal name that is output on the basis of the face authentication in response to an input of the image data, and then output the converted analysis item.

### 2-3-5-3. Occurrence time

As indicated by the example illustrated in FIG. 14, the operator terminal 20 displays "when" that is associated with the occurrence time of an event as one of the analysis categories. In the example illustrated in FIG. 14, "weekday business hours", "weekday outside business hours", "weekday late night hours", "day off daytime zone", and "day off late night zone" are displayed as the analysis items that are able to be specified from the image capturing time of the image data. Moreover, in FIG. 14, the "weekday business hours" is being selected by an operation performed by the operator O. Furthermore, the analysis items that are able to be specified from the image capturing time of the image data are not limited to the example described above.

At this time, the analysis items that are able to be specified from the image capturing time of the image data as the occurrence time of the event may be the analysis items that are classified by the server device 10-2 on the basis of a work schedule at a company registered in advance, school day schedule, and the like, or may be the analysis items that are output on the basis of a day of the week, time of day, and the like that are set by the operator O. Moreover, the analysis item of the occurrence time of an event may be the analysis item that is output on the basis of the analysis model AM that directly outputs the analysis item in accordance with an input of the image data.

### 2-3-5-4. Identification of a thing

As indicated by the example illustrated in FIG. 14, the operator terminal 20 displays "what" that is associated with the above described "analysis category example 3: identification of a thing" as one of the analysis categories. In the example illustrated in FIG. 14, a "desk", a "chair", a "cardboard box", a "locker", a "file", a "safe", a "personal seal", a "foliage plant", and a "shredder" are displayed as the analysis items that are output by the AI logics included in the "identification of a thing" selected by the operator O on the above described "AI logic selection screen". Moreover, the "file" is being selected by an operation performed by the operator O.

At this time, the analysis item that is output by the AI logics included in the "identification of a thing" may be an analysis item that is directly output by the analysis model AM, or may be an analysis item that is output after an output analysis item has been converted. Moreover, in a case where a target object associated with the "motion of a person" is not present, the operator O may skip the selection of the "identification of a thing" .

### 2-3-5-5. Motion of a person

As indicated by the example illustrated in FIG. 14, the operator terminal 20 displays "what did you do" that is associated with the above described "analysis category example 1: motion of a person" as one of the analysis categories. In the example illustrated in FIG. 14, items of "entering a room", "leaving a room", "taking out", "leaving behind", "using violence", "falling down", "vomiting", and "crying" are displayed as the analysis items that are output from the AI logics included in the "motion of a person" selected by the operator O on the above described "AI logic selection screen". Moreover, the analysis item of "taking out" is being selected by an operation performed by the operator O. Furthermore, the analysis items that are output by the AI logics included in the "motion of a person" are not limited by the above described example.

At this time, the analysis item that is output by the AI logic included in the "motion of a person" may be an analysis item that is directly output by the analysis model AM, or may be an analysis item that is output after an output analysis item has been converted.

### 2-3-5-6. Degree of importance

As indicated by the example illustrated in FIG. 14, the operator terminal 20 is able to input the "degree of importance" that indicates urgency or the like associated with a combination of the analysis items for each analysis category. In the example illustrated in FIG. 14, the "degree of importance 8" (the minimum value 0, and the maximum value 10) is input to the combination of the analysis items of {who: "non-registered person", when: "weekday business hours", what: "file", and what did you do: "taking out"} selected by the operator O. Furthermore, an input format of the "degree of importance" is not limited to the above described example, but the "degree of importance" may be indicated by using a score between 0 and 100%, a rank of A, B, or C, a rank of high, medium, or low, or the like.

### 2-3-5-7. Reaction

The operator terminal 20 is able to input a "reaction", such as an alarm notification, that is associated with the "degree of importance". For example, it may be possible to input a reaction of {degree of importance: "0", and reaction: "event record"}, a reaction of {degree of importance: "1 to 6", and reaction: "image data record"}, a reaction of {degree of importance: "7 to 10", reaction: "image data record" and "alarm notification"}, or the like as the reaction executed by the server device 10-2.

### 3. Flow of each process performed in cyclic monitoring system 100-2

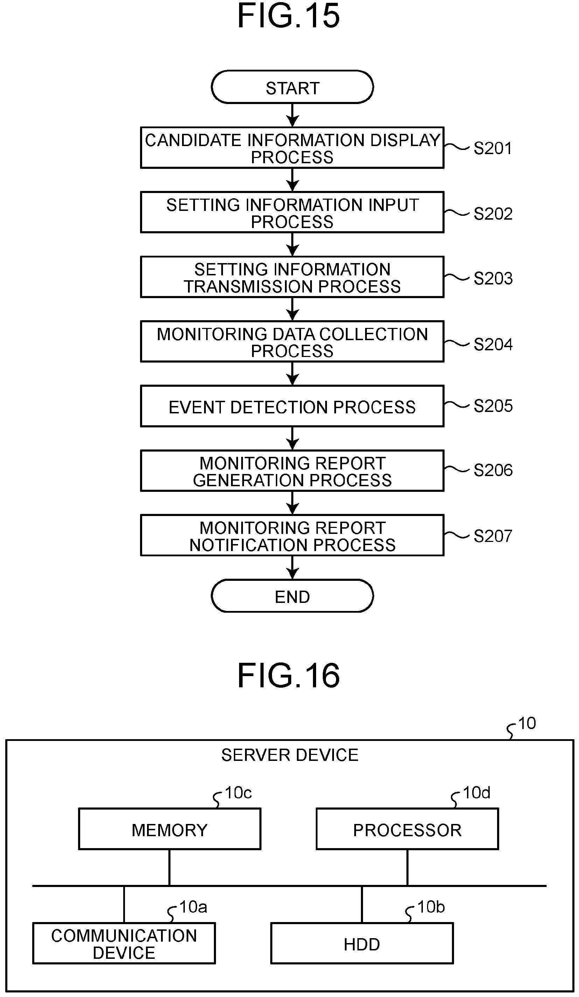

The flow of the processes performed in the cyclic monitoring system 100-2 according to the second embodiment will be described with reference to FIG. 15. Furthermore, the processes performed at Steps S201 to S207 may be performed in different order. Moreover, some of the processes performed at Steps S201 to S207 may be omitted.

### 3-1. Candidate information display process

At a first step, the operator terminal 20 performs a candidate information display process (Step S201). For example, the operator terminal 20 displays, on the monitor, a setting screen in which a list of the identification information on the AI logic for each analysis category, and an output value list for each AI logic, or the like is presented as the candidate information.

### 3-2. Setting information input process

At a second step, the operator O performs a setting information input process (Step S202). For example, the operator O inputs, as the setting information, selection of the AI logic that is used for an analysis by selecting an AI logic from the list of the identification information on the AI logic for each analysis category; selects, for each analysis category, the analysis item that is output by the selected AI logic; and inputs, by assigning the degree of importance to the event that is the combination of the selected analysis items, the degree of importance associated with the event as the setting information.

### 3-3. Setting information transmission process

At a third step, the operator terminal 20 performs a setting information transmission process (Step S203). For example, the operator terminal 20 transmits, to the server device 10-2, the selection of the AI logic for each analysis category, the degree of importance of the event, or the like as the setting information that is input to the operator terminal 20 by the operator O.

### 3-4. Monitoring data collection process

At a fourth step, the server device 10-2 performs the monitoring data collection process (Step S204). For example, the server device 10-2 collects, from the camera 30A installed in each of the monitoring target sites, pieces of image data on the still images or the like captured every seconds. Moreover, the server device 10-2 collects, from the sensor 30B installed in each of the monitoring target sites, pieces of measurement data on the temperature measured every seconds.

### 3-5. Event detection process

At a fifth step, the server device 10-2 performs an event detection process (Step S205). For example, the server device 10-2 analyzes the image data by using the analysis model AM associated with the selected AI logic, and detects an event that is a combination of the attribute of a person or the like appearing the monitoring target site, a behavior performed by the person or the like appearing in the monitoring target site, and a target related to the behavior. Moreover, the server device 10-2 analyzes the measurement data by using the analysis model AM associated with the selected AI logic, and detects an event that is a combination of an abnormality value of a room temperature or the like indicated in the monitoring target site and the device that is a cause of the abnormality.

### 3-6. Monitoring report generation process

At a sixth step, the server device 10-2 performs a monitoring report generation process (Step S206). For example, the server device 10-2 generates, by using the generation model GM that is a language generation model, a monitoring report that includes the text data that indicates the content of the event that has occurred in the monitoring target area. At this time, the server device 10-2 is also able to generate a monitoring report including the text data in accordance with the degree of importance that is associated with the event. Furthermore, the server device 10-2 is also able to generate a monitoring report including audio data or video image data, together with the text data.

### 3-7. Monitoring report notification process

At a seventh step, the server device 10-2 performs a monitoring report notification process (Step S207). For example, the server device 10-2 transmits the generated monitoring report to the operator terminal 20, and causes the monitor of the operator terminal 20 to display a text that indicates the details or the outline of the event. Moreover, the server device 10-2 is also able to cause the operator terminal 20 to read out the text or to display the synchronized video image, in addition to cause the operator terminal 20 to display the text that indicates the details or the outline of the event or the statistical value. Furthermore, the server device 10-2 is also able to cause the monitor of the operator terminal 20 to display an alarm.

### 4. Effects of the second embodiment

In the process according to the above described second embodiment, the server device 10-2 stores therein the plurality of analysis models AM that output the target in the monitoring target site when the monitoring data is input, accepts selection of the analysis model AM from the plurality of analysis models AM, collects the pieces of monitoring data acquired by the monitoring device 30 that is installed in each of the plurality of monitoring target sites included in the monitoring target area, inputs the collected monitoring data to the analysis model AM for which the selection has been accepted, detects the event that has occurred in each of the plurality of monitoring target sites in accordance with the output analysis target, and generates, by using the generation model GM that outputs the text data that indicates the content of the event that has occurred in the monitoring target area when the detection result is input, the monitoring report including the output text data. As a result of this, in this process, it is possible to detect the event that has occurred in each of the monitoring target sites with high accuracy, and it is also possible to effectively recognize the event that has occurred in the monitoring target area.

### System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by each of the devices can be implemented by a CPU and by programs analyzed and executed by the CPU or implemented as hardware by wired logic.

### Hardware

In the following, an example of a hardware configuration of a server device 10 (10-1 and 10-2) that is an information providing apparatus will be described. Furthermore, the other devices may also have a similar hardware configuration. FIG. 16 is a diagram illustrating an example of the hardware configuration according to the first embodiment and the second embodiment. As illustrated in FIG. 16, the server device 10 includes a communication device 10a, a hard disk drive (HDD) 10b, a memory 10c, and a processor 10d. Moreover, each of the units illustrated in FIG. 16 is connected by a bus or the like with each other.

The communication device 10a is a network interface card or the like, and performs communication with another server. The HDD 10b stores therein a database and a program that causes the functions illustrated in FIG. 2 and FIG. 9 to operate.

The processor 10d operates the process that executes each of the functions described above in FIG. 2, FIG. 9, or the like by reading the program that executes the same processes as those performed by each of the processing units illustrated in FIG. 2 and FIG. 9 from the HDD 10b or the like and loading the read program in the memory 10c. For example, the process executes the same functions as those performed by each of the processing units included in the server device 10. Specifically, the processor 10d reads, from the HDD 10b or the like, the program having the same functions as those performed by the collection unit 15a, the analysis unit 15b, the generation unit 15c, the notification unit 15d, the acceptance unit 15e, and the like. Then, the processor 10d executes the same processes as those performed by the collection unit 15a, the analysis unit 15b, the generation unit 15c, the notification unit 15d, the acceptance unit 15e, and the like.

In this way, the server device 10 operates as a device that executes various processing methods by reading and executing the program. Furthermore, the server device 10 is also able to implement the same functions as those described above in the embodiment by reading the above described program from a recording medium by a medium reading device and executing the read program. In addition, the program described in this embodiment need not always be executed by the server device 10. For example, the present invention may also be similarly applied to a case in which another computer or another server executes the program or in a case in which another computer and another server cooperatively execute the program with each other.

The program may be distributed via a network, such as the Internet. Furthermore, the program may be executed by being recorded in a computer readable medium, such as a hard disk, a flexible disk (FD), a CD-ROM, a magneto-optical disk (MO), or a digital versatile disk (DVD), and being read from the recording medium by the computer.

According to the present invention, an advantage is provided in that it is possible to effectively recognize an event that has occurred in a monitoring target area.

## Claims

1. An information providing apparatus (10) comprising:
a collection unit (15a) that collects monitoring data acquired by a monitoring device that is installed in each of a plurality of monitoring target sites included in a monitoring target area;
an analysis unit (15b) that detects, based on the collected monitoring data, an event that has occurred in each of the plurality of monitoring target sites; and
a generation unit (15c) that generates, by using a machine learning model that outputs text data that indicates content of the event that has occurred in the monitoring target area when the detection result is input, a monitoring report that includes the text data.

2. The information providing apparatus (10) according to claim 1, wherein
the collection unit (15a) collects, as the monitoring data, image data acquired by an image capturing device that is installed in each of the plurality of monitoring target sites,
the analysis unit (15b) detects the event based on the collected image data, and
the generation unit (15c) generates the monitoring report by using the machine learning model that outputs the text data when the detection result is input.

3. The information providing apparatus (10) according to claim 1 or 2, wherein
the collection unit (15a) collects, as the monitoring data, measurement data collected by a measurement device that is installed in each of the plurality of monitoring target sites,
the analysis unit (15b) detects the event based on the collected measurement data, and
the generation unit (15c) generates the monitoring report by using the machine learning model that outputs the text data when the detection result is input.

4. The information providing apparatus (10) according to any one of claims 1 to 3, wherein the generation unit (15c) specifies a degree of importance associated with the event, and generates the monitoring report including the text data in accordance with a condition assigned to the degree of importance.

5. The information providing apparatus (10) according to claim 4, wherein, when the degree of importance associated with the event is equal to or greater than a first threshold, the generation unit (15c) generates the monitoring report including an explanatory text that is related to the event and that does not have an upper limit of the number of characters as the text data.

6. The information providing apparatus (10) according to claim 4 or 5, wherein, when the degree of importance associated with the event is less than a first threshold and is equal to or greater than a second threshold, the generation unit (15c) generates the monitoring report that includes at least one of an explanatory text related to the event and a statistical value of the event within a range of an upper limit of the number of characters as the text data.

7. The information providing apparatus (10) according to any one of claims 4 to 6, wherein, when the degree of importance associated with the event is less than a second threshold, the generation unit (15c) generates the monitoring report that includes a statistical value of the event as the text data.

8. The information providing apparatus (10) according to any one of claims 1 to 7, wherein the generation unit (15c) generates the monitoring report that includes audio data that indicates the content of the event, together with the text data that indicates the content of the event.

9. The information providing apparatus (10) according to any one of claims 1 to 8, wherein the generation unit (15c) generates, together with the text data that indicates the content of the event, the monitoring report that includes audio data that indicates the content of the event and video image data that is synchronized with the audio data.

10. The information providing apparatus (10) according to any one of claims 1 to 9, further includes:
a storage unit (14-1, 14-2) that stores therein a plurality of machine learning models each of which outputs an analysis target located in the associated monitoring target site when the monitoring data is input; and
an acceptance unit (15e) that accepts the selection of the machine learning model from among the plurality of machine learning models, wherein
the analysis unit (15b) inputs the collected monitoring data to the machine learning model for which the selection has been accepted, and detects, in accordance with the output analysis target, the event that has occurred in each of the output plurality of monitoring target sites.

11. An information providing method that causes a computer (10) to execute a process comprising:
collecting monitoring data acquired by a monitoring device that is installed in each of a plurality of monitoring target sites included in a monitoring target area;
detecting, based on the collected monitoring data, an event that has occurred in each of the plurality of monitoring target sites; and
generating, by using a machine learning model that outputs text data that indicates content of the event that has occurred in the monitoring target area when the detection result is input, a monitoring report that includes the text data.

12. An information providing program that causes a computer (10) to execute a process comprising:
collecting monitoring data acquired by a monitoring device that is installed in each of a plurality of monitoring target sites included in a monitoring target area;
detecting, based on the collected monitoring data, an event that has occurred in each of the plurality of monitoring target sites; and
generating, by using a machine learning model that outputs text data that indicates content of the event that has occurred in the monitoring target area when the detection result is input, a monitoring report that includes the text data.
